# EUROPEAN PATENT APPLICATION

(11) **EP 1 455 291 A1**
(43) Date of publication of application: **08.09.2004**
(21) Application number: 03396018.8
(22) Date of filing: 06.03.2003
(51) Int. Cl.: G06F 17/60

(54) **Method, means and computer program product for setting rating**

(71) Applicant: Comptel OYJ, 00180 Helsinki (FI)
(72) Inventor: Latvala, Petri, 02210 Espoo (FI); Alanen, Eila, 00380 Helsinki (FI)
(74) Representative: Tiilikainen, Jarkko Tapio

(57) **Abstract**

This publication discloses a method for setting rating. It also discloses means and a computer software product for setting rating, a rating system, and a method in the rating system. In the method for setting rating, an internal event format of some event formed through a value system, an event-description rating process is executed to form a rated internal event format, and the rated internal event format is processed and sent to be stored in a data store and for use in an external system. The external system can be, for example, a billing system, a balance-monitoring system, or a prepaid system. The disclosed means and the disclosed computer software product are set to execute the corresponding operations.

## Description

The present invention relates to a method, according to the preamble of Claim 1, for setting rating. The invention also relates to means, according to the preamble to Claim 18, for setting rating, to a rating method according to Claim 35, in a rating method according to Claim 36 in a rating system, and to a computer software product, according to Claim 37, for setting rating.

Methods and means of this kind are used for setting the total rating to be charged for a total service providing a value chain comprising many services of several corporations and possible official charges relating to the chain, as well as for creating a billing internal event format. In this application, the term company also refers to an association or a public administration enterprise, which, in this publication, is a company. Herein the term customer refers to a customer of the aforesaid company.

In the prior art, methods of this kind are used, for example, for integrating mobile services and roaming. One American iPass solution is a separate method that resolves service roaming, and which includes identification of the user and an inter-operator settlement procedure using simple rating. Service roaming is permitted by unifying a ticket (CDR) of the various ISPs, or other transaction-formats. The solution disclosed in the American iPass's patent publication US 2001/0034677 A1 has enabled roaming related to mobile services. The method is stated to be suitable for electronic commerce, for instance. Methods and equipment of this kind for setting rating are used to define the payment that the customer is to be charged for purchasing services and goods, and to define the payment to be made to producers, service providers, intermediaries, and official entities. The solution involves many service providers and many service customers, as well as the environment of the roaming and access service. Transaction data is received from many transaction sources. The system for clearing accounts includes a flexible rating system, which supports a rating model, which has the following characteristics. Firstly, it includes a group of data structures, which are dependent on a specific customer, service provider, service access point, service access type , such as optionally a modem, ISDN, or DSL, or the customer's use of the service during a specific cycle. Secondly, it includes any combination (a) of use, for example, as a function of the rate and length of session, (b) of transaction-specific, and (c) connection-specific, or flat-rate rating, or, for example, one rate for all use during a billing cycle, or one or more rates for each user during the billing cycle. Thirdly, it includes the discounts and campaigns offered, and fourthly a group of charges, such as initial charges, monthly charges, and monthly minimum commitments. The iPass solution includes so-called multi-tiered rating models, or the provider's internal roaming, in which the purchasing and sales rates in a particular location are bound to the provider, and which takes into account whether this includes service access for subsequent customers, their subsidiaries, or their subsequent customers.

Drawbacks of the prior art include the complexity, slowness, and rigidity of creating and amending rating operations in a multi-corporation environment.

The invention is intended to create a method, means, and a computer software product for defining rating, which will enable more flexible use in a multi-corporation environment.

The invention is based on configurable uniform management mechanisms for the input processes, processing, adjustment, and output processes of events. The invention is based on the comprehensive performance and control of the rating processes.

More specifically, the method according to the invention for setting rating is characterized by what is stated in the characterizing portion of Claim 1. The means according to the invention for setting rating are, in turn, characterized by what is stated in the characterizing portion of Claim 18, the rating system according to the invention by what is stated in the characterizing portion of Claim 35, and the rating method according to the invention in a rating system by what is stated in the characterizing portion of Claim 36. The computer software product according to the invention is characterized by what is stated in the characterizing portion of Claim 37.

The use of the method according to the invention for setting rating achieves a significant advantage. Its use permits a more diverse adjustment of rating, thus allowing different rating requirements to be taken into account better. In many cases, the method according to the invention also permits simpler and faster changes in rating.

The invention also has embodiments, which make it possible to provide a flexible configurable machine for the rating of various events, including the contract, customer, product, volume, customer-price, and discount allocations required in rating. These ratings and allocations can be created for desired types of events, from the point of view of the parties' roles. Party-roles include, for example, end customer, interconnect, sales, producer, and similar. Thus, the neutral entity that takes care of the total system can give each entity/participant in the value chain the information relating to them, take care of the total process rapidly and in a centralized manner, and nevertheless keep confidential information confidential.

The invention also has embodiments, in which the means for setting rating can be combined to form a solution for a desired sector, which receives the events to be rated and to which contract, product, price, discount, and other similar data can be supplied through interfaces from a company's operative system, by means of which, according to the configured process, it is possible to supplement the event to be rated and calculate an event's price and discount components, as well as its possible taxes. The rated event can be forwarded according to the configured process to further processing systems, such as billing, prepaid billing, limit monitoring, bonus calculation, cost monitoring, product monitoring or storage in a database.

The invention also has embodiment, in which the methods and means can be adapted for many sectors. The collection/reception of events can be seamlessly attached with the rating process, thus facilitating the rating process. The delivery of the rated and original events can also be seamlessly correlated with the rating process. Thus, contact, customer, product, volume, price, customer price, and/or discount data need not be maintained in many locations, thus saving human and data-processing resources. An event can be rated as separate processes from the point of view of each requisite operating requirement. All the calculation relating to the rating of an event, or the calculation that it is beneficial to centralize, can be carried out at one time. Possible discounts and taxes can also be combined with this. An individual system can be set to rate the events of several different companies or other corporations, using, however, the process rules of each company. In some embodiments, the means can be made available for use by a service center, in which case at least two customer companies of the service center can enter and check rated events and initiate their own processes.

In some embodiments, the undesirable delay between a trading event and the receipt of payment can be reduced, thus facilitating and/or accelerating the management of the real processes behind the financial processes. Thanks to the more accurate information provided by some embodiments, there is no need to tie up so many resources in individual processes, just in case they are required, thus making processes more economical or productive. Such embodiments also provide means for increasing cash circulation and thus for increasing turnover or the GDP. An increased turnover or GDP will make it easier for management to implement other objectives.

In the following, one method according to the invention for controlling rating and billing is examined with the aid of figures. It is also possible to provide means for implementing the method described below.

Figure 1 shows a block diagram of one event reception process according to the invention.

Figure 2 shows a block diagram of one event rating process according to the invention.

Figure 3 shows a block diagram of one storage process according to the invention.

Figure 4 shows a block diagram of one delivery management process according to the invention.

Figure 5 shows a block diagram of one operative utilization process according to the invention.

Figure 6 shows a block diagram of one operative control process according to the invention.

Figure 7 shows the stages of rating processing according to Figure 2 in greater detail.

Figure 8 shows one stage 203 of rating processing according to Figure 2 in greater detail.

Figure 9 shows one stage 204 of rating processing according to Figure 2 in greater detail.

Figure 10 shows one stage 208 of rating processing according to Figure 2 is greater detail.

Figure 11 shows one means according to the invention for setting rating.

Figures 12a - 12c show the operational interface of one means according to the invention.

Figure 13 shows one possible role division for implementing the method of the invention, or for maintaining the means according to the invention.

Figure 14 shows one possible role division between operative utilization and operative control, for maintaining the means according to the invention.

Figure 15 shows one rating form chart available according to the invention.

Figure 16 shows one rating adjustment form chart available according to the invention.

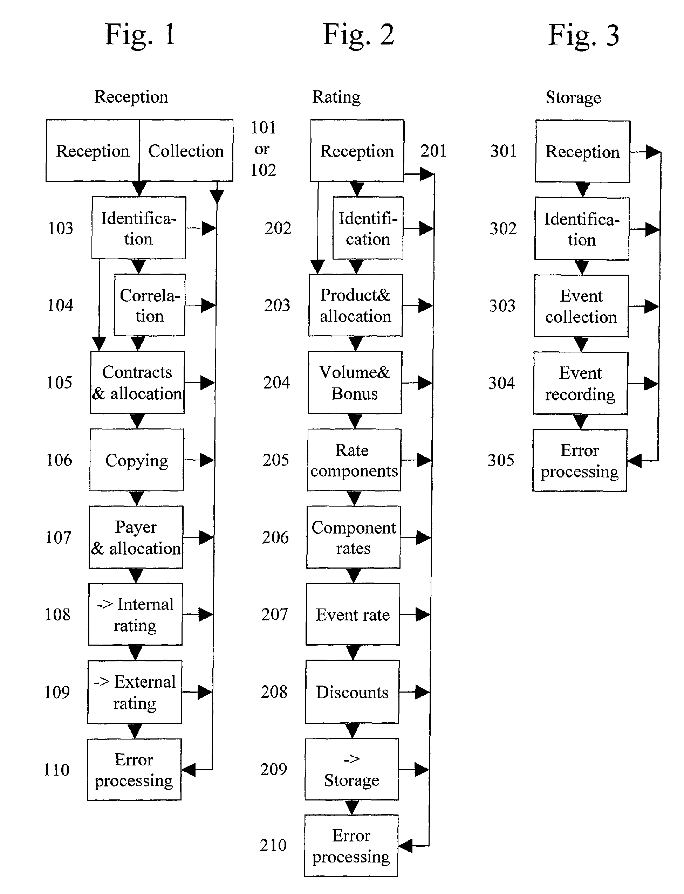

The following is a description of the processes and operations of the rating system used to perform one method according to Figures 1 - 6.

In the method, events to be rated are received, the rating process is performed for the events to be rated, and rated internal event formats are created.

The method has the special feature that configuration interfaces are provided for at least two entities. In a situation, in which the total event comprises a service of several corporations, at least two entities, in this case corporations, have a configuration interface for setting their own rating. The rating process is performed for configuration rules and/or parameters received through the interfaces in the directions of at least two entities. In the method, at least two events are correlated, so that a single total event ready for rating is formed from them, for which the rating process is performed on the basis of all its participant roles, parameters, and configuration rules. Thus, the provider of a brokerage service, for instance, can obtain rated events of its own services, independently of what the end customer is billed for them in connection with total services.

**First of all, the reception processing according to the block diagram of Figure 1 is presented.**

Reception processing is performed as a chain of operations. In the method, an automatic event reception or retrieve function is set. The events are typically service usage events, trading events, or other cash events. Parallel to the reception or search function, a possibility is typically set for material to be entered from an entry form from an electronic desktop in the user's computer.

The reception of a batch of (1 - n) events from the direction of an entity, such as a producer company, that supplies material, is used to initiate the performance of the reception processing. Alternatively, the initiation used can be a calendar-controlled or manual event batch retrieve from the recording location of an entity supplying a retrieve, or the reception of a material input from an interface. A further alternative to these is for a reception material re-processing request, generated internally by the system, to be used as an initiation.

### Operational requirements

In order for received material to act as an initiation in this method, the following event identifier data must be found from it - receiver of the event, sender of the event, data required for the classification of the event, and contract identifier data. Supplementary data on contracts and paying customers for events are maintained as the basic data of the rating system.

All the events to be rated arrive at the rating system through a reception component. The stages 101 - 110 of the reception processing are performed in order to identify, check, or classify at least one trading event, to allocation the event to various contracts, and to supplement the event data for further processing of the rating. Method stages 101 and 102 are alternatives.
101) In the reception of an event, the events to be rated are received from a supplying entity, interface input, or the system's internal reception, in which there is an interface service listening in a wait state. The processing of the events to be rated can be selected as immediate processing, normal processing, in which there can be a delay due to processing load, or batch type of processing. The processing can be timed to take place at quiet times in terms of processing load. Thus, the urgency of the processing can be used as a rating factor for the services of the rating system, so that rating is determined according to the service received. The received events are unloaded into a company-specific processing queue, according to their urgency classification. In the processing of the received events, strong identification is followed and the use of encryption of the data contact of the events is recommended. The original events are stored as received data in a backup-copy type store or database.
102) Alternatively, at least one event is retrieved for stage 101 from a location indicated by the supplying entity. Retrieval takes place as a controlled data transfer.
103) In event identification, the recipient's and sender's identity data or identifiers are sought and checked. The recipient is a customer of the rating system service and the sender is the company supplying the event data. The correctness of the essential fields and what material the sender is entitled to send to the recipient are checked from the basic data of the system. The identifier data of the event type is sought from the event data and the event is classified according to it. The rating process pipeline of the event, i.e. how the operations of the rating system should process the event, is decided from the event. Recipient, sender, and event-type data are added to the event data.
104) Event data correlation is an optional operation. If the event to be rated is correlated from several event data, which come in separate batches and from the different sources of one or more producer companies, then a single event to be rated is collected from them. The collection of the event can be given mandatory termination, in case some event/s are not brought to the rating system within the defined time frame. The event can then either be placed in the continuation of the normal rating processing, or it can be defined as erroneous. The operation then continues from stage 110.
105) The role-specific identifiers for the contract-data, defined by the company for every event type, are sought from the event data. They are used as a basis for a search for all of the contracts that can be found, with the aid of the identifier data, from the system's basic data. For example, this procedure is used to link the internal event formats' allocations to the operative systems via interface files. Similarly, when the event data's identifier data, for example the a-subscriber identifier of a call event, is used several contracts may be found, which are all taken into account in the rating processes. If no contract is found using the event data's identifier data, or if there are mandatory defined contracts in the basic data, the processing of the event moves to the error procedure stage 110.
106) When creating the events to be rated, a separate contract-allocated event is copied for each event contract and is supplemented from the contract with, for instance, the contract identifier, the contract type, owner, payer, and user customer data, special rating terms and conditions defined for the contract, such as campaign data, price lists/prices, billing currency, and contract-specific discount data. The processing of all the copied events retains the urgency class of the original event.
107) Supplementary data on the customer are sought when allocating a paying customer to a contract-allocated event: these include the customer groups to which the paying customer belongs, customer-specific discount data, customer/customer-group-specific campaign data and loyal-customer data, as well as information as to whether the customer/contract, or any of the products used by the customer have limit monitoring. All of the events copied from the original events and added in the reception processing are saved in a backup-copy-type store for received material.
108) Sending an event for rating is an optional operation to stage 109. The event, which has been supplemented according to a fixed format for rating is ready for the rating procedure, to which it is transferred. The system's overall control receives an acknowledgement of the delivery to rating, to allow the rating system processing of the reception batch to be controlled there.
109) Sending an event for rating is an optional operation to stage 108. The event, which has been allocated to a contract party and supplemented in a fixed format for rating, is sent to an external system.
110) Error procedure and interrupt is a stage that can come from any of the reception operation stages 101 - 109. Errors detected in the reception operations are analyzed and classified, and a description is entered in the error data, which may be utilized to re-initiate the reception process, once the cause of the error has been corrected.

### End results

An event supplemented with contract and customer data, which has been allocated and copied to form a contract-specific event of the recipient company, has been received, identified, classified, and approved for the rating procedure.

### Special characteristics of the reception procedure

In the reception procedure, configurability characteristics are exploited.

The preliminary systems for events retrieved to reception processing/sought for are systems of the entities, typically companies, producing the events. Interfaces, in which format the material sent by each entity is adapted when applying the services of the rating system.

The operational contract and customer data utilized in the reception procedure are also sent in advance to the rating system's basic data through an interface.

Parameter data received from an external operative system are loaded into the memory for the duration of the rating-process processing.

**The following describes the rating procedure according to the block diagram of Figure 2.**

The events coming to the rating procedure are pre-processed according to the reception procedure. Rating takes place one event at a time. Rating includes the productization of the event, the definition and calculation of a product-specific rate, and the definition and calculation of product-specific discounts.

Typically, only part of the rating procedure, e.g. discount allocation, is carried out for an event.

### Initiations

An event is brought from the reception procedure or the overall control of the system

### Preconditions

The preconditions for processing an event to be rated:
- From the event to be rated, it is necessary to find the entity, typically a company, owning the event, the entity sending the event, the classification data of the event and the factors individuating the classified event, and the data required to allocate and productize the event, and to define and calculate the rate and discounts.
- Identifier data are found from the event.
- The necessary parts of the product, price list, and discount data are available to the rating system, and
- The rating rules of the rater have been maintained.

The progress of the events is examined in the following. This is one way of carrying out the rating process of the internal event formats. The method stages 201 - 210 are performed in order to set the rating.
201) An event is received. The events to be rated are sent to the rating procedure from the reception procedure, or directly from the system's overall control.
202) The event is identified, in which case the recipient and sender are checked from the received event identifier data. The recipient is the customer of the rating-system service and the sender is the entity sending the event. It is decided from the event what rating processing it is needed to apply to the event, for example, only discount processing. If operations are only bypassed in the rating procedure, formality checks are made on the event. For example, for only discount processing, a rate and its product-specific components may be calculated for the event.
203) The event is product allocated. A search is made for the products and product structures used in the event, down to the ratable level. The product structure data of the event is added to the event. If the rating takes place at the product level of the product structure, the event is copied as a product-specific event for the definition and calculation of the rate. This is a technical division of the event. Operations 203 - 206 are carried out separately for each product-level event.
204) Possible volume and/or bonus accumulation processing is executed. The event's customer and/or contract data are used to check the collection requirements of the volume and bonus accumulation data set for the event's products and the current accumulation counters are sought. The accumulation indicators and their corresponding accumulation counter values are added to the product-specific events.
205) Rate component processing. The rate components and their unit price, account, and tax data according to the customer-specific rating factors are sought for the product-specific events. The rate definition takes into account possible customer and customer-group-specific rates and allocated and product-specific campaign rates. When defining the product's rate components, the event's contract currency is primarily used. In other cases, the default currency defined by the company owning the rating process is used. Failure to find the rating components even in this currency indicates an error, and the procedure goes to error processing. If the rating components are found in the default currency, a Warning level notification is made to the error processing, as the rater may have failed to update the rating factors.
206) The rates for the products' components are calculated. The component rates are calculated product-specifically and added to the event's product-specific rate components. Account and tax data are added to the rate components.
207) The event's rate is calculated. The combined event rates and the event's product-specific rates and account-specific taxes are calculated from the rate component's rates, while the excess rate components and technical events are deducted. The event's total rate is calculated event-specifically. If the event's products are rated in different currencies, the total rate is calculated currency-specifically. When calculating the total rate, a certain number of different product-specific currencies must be allowed for. If the event includes products in several different currencies, no total rate is calculated for the event. When calculating the total rate, the event and product-specific effects of the minimum and maximum rate must be allowed for. If the products of the event being rated affect volume or bonus accumulations, the accumulation counters are updated.
208) The event's discounts are processed and allocated. The event's customer, contract, and product-specific data are used to seek all the discounts or discount possibilities to be allocated to this event. The discounts are calculated for the products of the event and discount rate components are formed from them. If several discounts are allocated to the event, they are calculated applying the discount conditions defined for the customer, if such are defined by the contract, or in the customer data, and the event data are updated, for example, by selecting the best discount, or calculating all the discounts. The discounts are added to the products of the event as their own discount rate components, or else their own event and discount rate components are copied from the discounts.
209) The event is sent to storage. The rated event and all its product-specific rate components are sent to the storage and delivery procedures.
210) Error procedures and possible interruption are executed. Any rating operation stage 201 - 209 can lead to an error procedure. Errors detected in the rating procedure are analyzed and classified, and descriptions, which may be utilized to re-initiate rating once the cause of the error has been corrected, are written in the error data. Alternatively, erroneous events, marked with error status, can be transferred to storage.

### End results

The rated event and the event's rated products of with their rate components are obtained.

### Special characteristics of the rating procedure

The rated events are received from the reception procedure of the rating system, or from the overall control of the system, if only the rating system's rating service is used.

The operative product, price list, volume, and discount data, to be utilized in the rating procedure, are sent in advance to the rating system's basic data.

Parameter data received from an external operative system are loaded into the memory for the duration of the processing of the rating process.

**The following describes the storage procedure according to the block diagram of Figure 3.**

The rated events are stored in a multi-company relational database as data of the company owning the event, after an optimal delay boosting the loading operation.

### The procedure is executed by

A program for automatic reception of the events into the database for storage. A program for automatic delivery of the events to a billing system or to an external system.

A program for responding to a stored-data retrieval or correction request received from the automatic billing control, or the overall control of the system. A technical user's queries and corrections.

### Frequency and volumes of execution

Execution is continuous. The storage volumes conform to the volumes of the reception and rating procedures.

### Initiations

Events are brought from the rater, or from the overall control of the system

The following describes the progress of the events. Stages 301 - 305 of the method are executed in order to store an event.
301) An event is received. The rated events and the product-specific rate components of an event are sent from the rating procedure, or through the overall control of the system from an external system, to the storage and/or delivery procedure.
302) The event is identified, i.e. the owner of the event is checked from the identifier data of the event received for storage. The owner is the customer of the rating system service and the sender is the company sending the event. The rated event is checked to determine if it should be stored for billing, in which case a billing internal event format is formed from the event, or if the rated event should be stored for some other purpose. Events to be stored can be classified to be stored in different stores physically or logically. The rated event is checked to determine whether it should be stored at all, or whether it should be delivered directly to an external system, as in stage 406.
303) The events for storage are collected. For more efficient loading, a set number of events for storage are collected, before they are loaded into a database according to the storage classification. In addition, a delay is defined, in which to wait for the number to be reached. If the event to be stored is included in limit monitoring, data on the event is sent to an external monitoring system, as in stage 405.
304) The event is stored in a rated events store, which is a relational database. The design of the base emphasizes the use of the base for invoicing. If the stored event is to be sent directly for invoicing, the method goes directly to the delivery procedure after storing, as in stage 404.
305) Error procedures, interruption. Errors detected in the storage procedure are analyzed and classified, and descriptions are written in the error files, which are utilized when correcting the error and in re-initiating storage.

### End results

The product data of the rated event and their price component data, added in the reception and rating procedures, are stored in the rated events store.

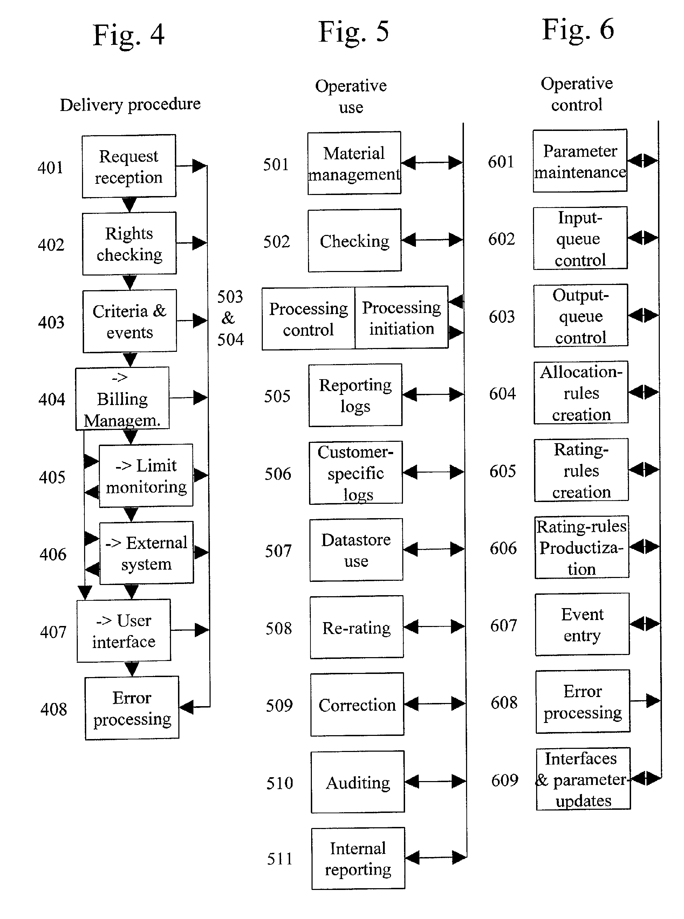

The following describes the delivery procedure according to the block diagram of Figure 4.

The rated events are delivered to external further processing systems immediately after the rating and storing procedures, or when a delivery request for them comes from external systems and the interface. Rated events can also be delivered to a limit-monitoring system.

The following describes the progress of the events. Stages 401 - 408 of the method are performed in order to deliver a rated event forward.
401) A delivery request is received, through the system's overall control from an external system, such as the management procedure for billing charges.
402) The rights of the request to deliver are checked. The event's owner and recipient are checked from the received delivery request or from the identifier data of the rated event. The owner is a customer of the rating system service and the recipient is the external system, to which the rated events are deivered.
403) The delivery request search criteria are checked and the events to be delivered are selected. The search can be made for the purpose of a query or updating. In the search, a delivery markup in a database can be requested, or removal of a delivery markup from a database, or for there to be no markup. The search criterion can be, e.g., customer, contract, product, or rate-component data and combinations of them, individuated by a storage identifier/s. The search/selection for data in the database and the updating of markup data are made according to the search criteria and the markup request.
404) The essential parts of the rated event are sent to the billing system. Delivery to the billing system can take place according to the rated events delivery interface used.
405) Sending of data to limit monitoring, which is an optional operation. Data on the rated events and product data are sent to the limit-monitoring system. The limit monitoring system is an external system, which controls both the checking of the billable charging limit and the updating of the network account or electronic wallet.
406) Delivery of data to an external system, which is an alternative operation to stage 404. Data on the rated event are delivered to the external system in database storage format.
407) Delivery to the user interface, which is an alternative operation to stage 404. Event data selected from the database is delivered to the desktop user interface of the storage, and delivery procedure or through the overall control for re-rating.
408) Error procedures, interruption. Any of the storage procedure stages (301 - 305), or the delivery procedure stages (401 - 407) can lead to the error procedure. Errors detected in the delivery procedure are analyzed and classified, and descriptions are entered in the error files, which are utilized in error-correction measures and in re-delivery or re-initiation of delivery.

The end result is a stored and/or delivered rated event.

### Special characteristics of the storage procedure

Storage utilizes database software. Delivery can take place as a data transfer to external systems.

Events to be stored are received mainly from the rating procedure. Events to be stored can also be received from an external system of the rating system, through the system's overall control.

Delivery requests come from external systems or user interfaces.

### The system's overall control procedures

The system's overall control includes the operative control of the processes of the rating system and operative operation from the user interfaces.

**The following describes operative operation according to Figure 5.**

The operative operation of the rating system using the user interface controls the operation of the rating system. Intranet user interfaces are available to the main users of the companies providing the rating service using the system, for example, for internal reporting. Extranet user interfaces are available to the main users of the customer companies using the rating service of the system, for example, for initiating the processing of material.

In the method, the control rules and parameters for the reception or retrieval process of the events to be rated are received, from the direction of various entities, such as different customer corporations, through a configuration interface connected to each direction. The control rules and parameters are used to control, in a centralized manner, the rating processes of the participant roles of each type of event. Either the reception or the retrieval of internal event formats form part of the rating process.

It is also possible to receive, from the direction of different entities, control rules and parameters for the delivery procedure of the rated events or of the delivery procedure of the corresponding original events, through a configuration interface connected in each direction, and in response to the control rules and parameters to control in a centralized manner the delivery process of the rated events or of the original events.

The user interfaces 501 - 511 are arranged in the operative operation of single means according to the invention for setting rating.
501) User interface for the control of event data.
502) Checking user interfaces for product-level events, for the technical main user of the system.
503) User interface for controlling the processing of an event or event data. Events to be rated are sent to the rating procedure from the reception procedure, or direct from the overall control of the system.
504) Initiation of the processing of an event or event data, user interface for initiating the processing of an event or event data.
505) Reporting logs, a user interface for the main user, for supervising and monitoring the progress of the processing of an event or event data.
506) Customer-specific logs, a user interface for the main user of a customer of the system, for supervising and monitoring the progress of the processing of an event or event data.
507) Initiation of the retrieval and delivery of an event or event data from the data store of the rating system, an interface for initiating the retrieval and delivery of a rated event or event data.
508) Initiation of the re-rating of an event or event data, interface for initiating the re-rating of an event or event data. The initiation interface for re-rating product-level events is for the technical main user of the system.

If either the technical main user, or a person responsible for billing or the billing process, or a customer detects an error in rated events, a need arises for correction measures and re-rating. The errors may have arisen in the pre or post-rating systems, in the external data systems used in rating, or in a lack of them, or in the rating system itself. The need to initiate re-rating may also arise from a correction measure for some other erroneous events, for example, if it is wished to make comparative rating, using new product and/or price-list definitions, for a selected group of events that have been already rated. When initiating re-rating, it is also possible to choose whether the re-rated events should be stored in the rated events store. The events can be requested for delivery to a further processing system.

Before initiating re-rating, the erroneous or adjusted data must be corrected in the operative system, for example, in the product, contract, campaign, or discount systems, from where they are sent to the rating process, or in the control parameters of the rating system itself. It is also possible for an invoice that has already been sent to a customer to be found to be erroneous and to lead to a need for re-rating. The process is then initiated from accounts receivable, where the invoice is credited and from where data is sent to the billing system and through it to the database of invoiced events. A service request is sent for the correction procedure for the stored rated events. There, credit events are made for the events in question and are delivered for distribution according to the original delivery procedure of the events. The adjusted source data is corrected and re-rating is executed for the credited events, from the original event format, or the rate is re-calculated from the internal event format of the rating process. A need for re-rating can also arise, for example, due to erroneous tariff for massive amount of rated events. The events to be rated may then have to be retrieved all over again from the pre-system of the producer company for the use of the rating system and by re-initiating rating from the start, from the source data of the events to be rated.
509) Initiation of the correction of an event or event data, initiation interfaces of the correction procedures of product-level events, for the technical main user of the system.
510) Auditing, in which the Audit Trail function of the rating process must produce sufficient rating-process entries to guarantee the completeness of the billing process in the case of the rating process of the events too, and to permit supervision, billing investigations, total control of the billing service, and auditors' investigations. Changes made by users are registered in the log data, which are part of the totality of the Audit Trail and from which data can be browsed and reported. The control of rated events also includes control of trace ability and control of the further and new use of the events.
511) The rating system's internal reporting, in which the rating system collects statistical data on its operations as a whole and by individual company, including how many and what events have been delivered from different companies, per unit of time, such as per hour, day, week, or month,
how many and what events have been allocated to contract parties, productized, assigned a rate or discount,
how many defective events there are, what controls have been tripped,
how many rated billing events have been sent to the billing system and how much billable value has been generated by from them, in euros and other currencies,
how many rated billing events are there that have not yet been sent to the billing system and what their billable value is in euros and other currencies, and how many rated events have been sent to various external systems.

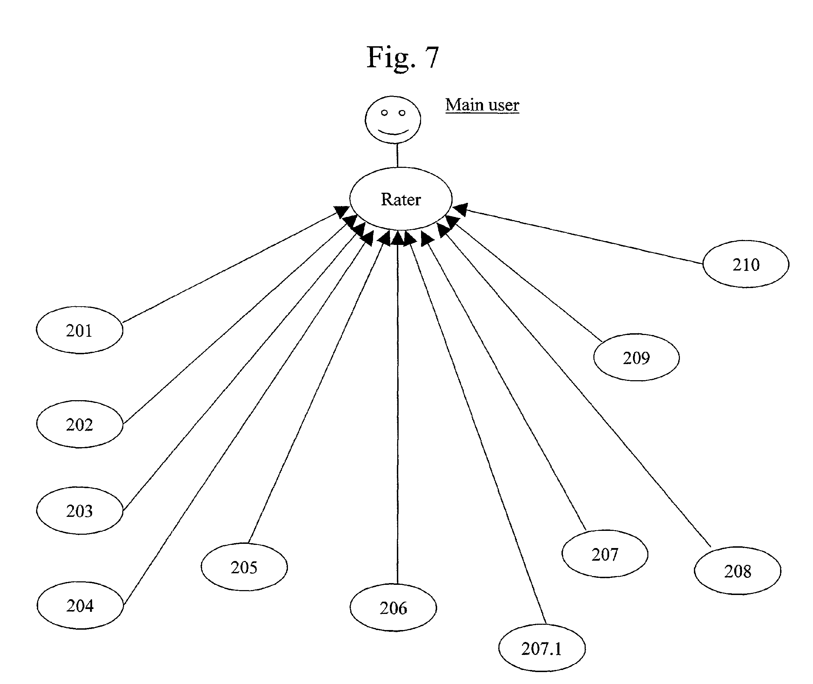

**The following describes the operative control according to Figure 6.**

The rating system's operational control interface is used to control and manage the functionality of the rating and the usability of the system. Intranet user interfaces are available to the main users of the company providing the rating service, for example, for managing the processing queues. Extranet user interfaces are available to the main users of the customer companies using the system's rating service, for example, for managing parameter updating tasks through external interfaces.

The method's user interfaces 601 - 610 are for controlling the rating system.
601) Is a parameter maintenance user interface, for maintaining parameters, the parameters maintained by using it being to present code data in a plain-text form on the user interface desktop.
602) Is an input-queue control user interface for the control and management of incoming events and the event data processing process.
603) Is an end-product queue control user interface for the control and management of the further procedure process of processed events and event data. Delivery of events allocated to contracts to the rater or a contract party, without the rating of the events. This management is used to ensure that each event allocated to a contract is sent to the rater, or if it is desired that the event is not to be rated at all but to be sent for further processing only allocated to a contract.
604) Is an allocation-rule creation user interface, for creating and updating the reception allocation rules.
605) Is a rating-rule creation user interface, for creating and updating rating rules. Use of the rater's description database user interface and the entering data are examples of a rating expert's tasks. He describes to the rater the so-called new rater services, which are the new products and price lists and other rating factors and structures affecting rating, of product managers, salespersons and other persons responsible operatively for customers, products, and price lists.
606) Is a rating-rules productization, i.e. colloquially use and fill user interface, for attaching and applying the rating rules created by a rating expert for a product, using the product's own values. It is also possible to input, from the user interface, the rating factors used by the rater, for the use of persons responsible for products and customers. For operative personnel, such a product managers, salespersons, and billing clerks, individual user interfaces are created for the re-use of the rater's services, by means of which they can easily create or alter new identifiers and values for the rater for products and product structures, as well as unit prices for these identifiers.
607) Is a ratable events input user interface, for the input of events to be rated. Customer, contract, and product data can be checked from the rating system's database. An event that has been entered for rating is delivered to the rating procedure. The rating and discount data of the event can also be entered directly to the event, for example, as a crediting event, as a rate and/or discount agreed with the customer on a one-time basis.
608) Is an user interface for processing errors detected in rating, for investigating the causes of errors detected in rating, and for controlling erroneous-event processing. The rating system must control the processing of errors in rating, for example, when an error has occurred in the rating procedure. Rating errors must be classified and a degree of seriousness defined according to the classification, such as a notification, confirmation, or warning error. The further processing of an erroneous event is decided according to the error-tolerance limit of the rating procedure's error classification, for example:
   - continue the rating process despite the error detection and make a warning marking on the event and in the audit-trail data, or
   - make an error notification and terminate the rating procedure at the stage in the rating at which the error was noticed. In this case, the rating of the event remains uncompleted.

Errors detected in the rating procedure are analyzed and classified and a description is written in the error files, which may be utilized to re-initiate the rating, once the cause of the error has been corrected.
609) Is an user interface for controlling parameter updates, i.e. updates of parameter data executed through external interfaces. This interface allows the main user of a customer using the rating system's services to control the updating of customer, contract, product, price list, and discount parameter sets from their own system to the rating system.

### Basic data interface processing

In basic data interface processing, data to be utilized in the rating system are received from an external operative system, through a data-type-specific interface. The received data are stored in a permanent store for the rating system and are exploited as loadable parameters in rating procedures.

The basic data are obtained from the operative systems of the companies using the rating-system service, in a format according to the basic-data-specific interface.

The basic data are utilized in reception procedures, rating procedures, storage processing, delivery processing, and overall control.

The basic data updated through the interfaces are company data, parameter-code values, customer data, contract data, product data, price-list data, discount data, volume-counter data, and also outwards from the limit-monitoring system interface.

### Description of the roles relating to the rating system

### PERSONAL ROLES

The rating system is arranged to have three main types of user; the main users of the owner of the system, i.e. the rating-system service provider, external main users of the system, and other users of the system.

The main users of the owner of the system are further divided into system operators, who are responsible for the technical functionality of the system, technical main users responsible for the operational maintenance and monitoring of the system, and operative experts, such as product managers, salespersons, billing clerks, and auditors. The rights they are given allow them to maintain the system or its operational parameters, to correct and re-initiate operations, and to supervise the operation of the system.

The rights given to the system's external users allow them access from the extranet desktop services to maintain and supervise the operative use of the system, from their own company's viewpoint, e.g., to maintain parameters and re-initiate operations and supervise the operation of the system.

The rights given to other users of the system allow them to use the extranet desktop services.

### SYSTEM ROLES

The interfaces of the rating system with other systems are the interface for incoming events to be rated, the interface for rated and/or processed events delivered out, basic-data delivery interfaces for utilizing the data of external systems, and interfaces for correction requests from external systems.

The system is able to provide rating services at the same level as it receives data through its external interfaces for rating processing, for instance, real-time rating starts once the event to be rated has been delivered to the rating system. Similarly, the correctness of the rating is affected by the correctness and correct timing of the basic data utilized in the rating. If the basic data is updated after the reception of events for rating, the rating result will be affected.

### Overview of the rating system

The rating system application includes:

The reception of events to be rated, which typically includes:
- reception of event data to be rated, or which use the rating system's services, in which event data can be retrieved at an agreed location where they are stored by the producer and/or owner company, or the producer and/or owner company can deliver event data to the rating system. The event data can come one at a time, or in batches of 1 - n events,
- reception checking of the event data, for example, whether the event data producer is entitled to send the owner company event data and to enhance the event data to form events to be rated, for instance, with the aid of producer and owner data,
- analysis, classification, and supplementing of events,
- correlation of event data sent at different times to reception processing, which should be assembled into a single event to be rated, before rating processing,
- storage of received event data for possible investigation and re-processing,
- allocation of event data to contracts and adding contract data, separate events to be rated are formed from each received event data, if it is allocated to a company's different contracts,
- productization of an event to be rated, which is allocated to a contract, to a ratable level and adding product data to the event,
- definition of the product-specific rate of an event to be rated, which allows for such factors as the definition of a campaign rate and the definition of a volume-based rate,
- calculation of the rates of the products of the event to be rated and the total rate of the event to be rated and adding them to the event to be rated,
- allocation and addition of discounts to the event to be rated,
- calculation and addition of discounts to the event to be rated,
- user interface intended for persons with product and customer responsibility, from which rating factors and rates used by the rater can be entered, and/or
- sending of a product-level rated event to storage, or without storage to an external system.

The rater receives a single event for rating and sends out the event it has rated. It is not interested in why it has been sent an event, or what happens to the event after the rater. The rater productizes the event and defines and calculates a rate and discount for it at event and product level. The rating allows for the volume-step-specific definition of the rate and discount.

Operation of the rater's description database user interface and the supply of data are the tasks of a rating expert. The expert depicts to the rater the so-called new rater services, which are new products and rate lists, campaign and other rating factors and structures affecting rating, which are the responsibility of product managers, salespersons, and others with operative customer, product, and rate-list responsibility. Operative personnel, such as product managers, salespersons, and billing clerks create their own user interfaces for the re-use of the rater's services, by which they can easily create or amend new 'codes' and values for the rater from the products and product structures, as well as unit rates for these 'codes'.

The storage of a rated event typically includes:
- storage of a rated event in a data store, as rate-component-level rated data of the event and product,
- delivery of a product-level rated event to a charging management of a billing system,
- delivery of a rated event to an external processing system, without storage in a rated-event store,
- correction of stored product and rate-component-level rated events in the data store,
- an interface for forming bill lines for received view and correction requests, and
- checking, correction, and re-rating initiation user interfaces for the system's technical main users, for event, product, and product price component-level stored data.

Rated events are stored in a technical multi-company database, in which not only the rated event is stored, but also data on the event at the product and product price component levels that have been involved in the event and for which the price is calculated in the event. Storage also includes the functionalities:
- delivery of the rated events to the billing system, and
- also delivery of the events marked for limit monitoring to the limit monitoring system, and/or
- processing according to the delivery requests of rated events, for example, selecting rated event data using different criteria.

Before proceeding to Figure 7, possibilities in event-data storage and use are reviewed.

The event data define the original event collected or received in the reception section of the rating system. The original event has been given a unique original identifier in the rating system.

If the reception of rated events includes storage of the original event data defined in the control parameters of the company's event-type processing, the original event data are stored in the original format of the event data, in the event data database.

If the reception of rated events includes delivery of an event-type party-role event copy defined in the control parameters of the company event-type processing, or a product-allocated product copy of the event data, the event data are delivered in the original format to an external system, according to the delivery parameters.

The original event data can be delivered from the rating system to an external system, without the rating procedures.

In the rating procedure, the event data are used when creating party-specific event copies according to an internal format. Storage of the original event data is an essential function; if the rating system's re-rating functionality is utilized, starting from re-allocation.

### Storage of rated events

If the reception of rated events includes the storage, in a rated events store, of an event-type party-role event copy defined in the control parameters of the contract-party event-type processing, the event is stored in a rated events database.

### Description of the storage processing chain

Rated events and the product-specific price components of an event are sent to the storage and delivery procedure from the rating procedure, or from an external system, through the overall control of the system.

The event storage and delivery control parameters of an event are checked as to whether it should be stored for billing or for some other purpose.

Product-specifically rated events are stored in a multi-company relational database as the data of the company owning the event, after an optimal delay in the loading procedure.

If the event to be stored belongs to the sphere of limit monitoring, data on the event is sent to an external monitoring system.

If the stored event is for immediate delivery to the billing system, a move directly to the delivery procedure is made after storage.

### Service-request interface processing of rated events

There is a service-request interface for viewing, retrieving, aborting, canceling, or initiating re-rating of the rated events.

The services can be classified as delivery requests, event-state updates, re-rating requests, test rating requests, and amendment requests.

The structure of a request file includes request control data concerning the entire request file and the necessary number of given search-factor lines.

### Delivery of rated events to external systems

### Rated-event delivery interface for limit monitoring

An optional function, in which data on the rated event and product data are delivered 401 to the limit-monitoring system. The limit-monitoring system is an external system, which controls both the checking of the billable charging limit and maintains the balance of the network account or electronic wallet. If a limit-monitoring identifier is added to the event in the allocation of the reception event-type party-role event copy, the event copy is stored in a storage-directory file defined in the parameters relating to the limit-monitoring identifier, or in the output queue. As an alternative to 404, 406, delivery of a rated event, in database storage format, to an external system can be executed. If delivering an event-type party-role event copy to an external system is depicted in the reception collection/delivery parameters, an event copy is stored in the storage-directory file defined in the parameters, or in the output queue.

**The following describes one rater-sub-system operating case diagram according to Figure 7.**

The rater element includes event productization, product package disassembling, definition, calculation, and adding of the rate of the event. The rating procedure is initiated from the reception procedure or the overall control of the rating system.

The figure shows the event reception 201, in which the events to be rated are sent to the rating procedure from the reception procedure, or direct from the overall control of the system. If an error is detected in the event reception, such erroneous events are stored in an erroneous-events file.

It will be necessary to identify 202 the event data of an event to be rated, if the event/event batch has been received from the overall control of the system, directly to the rating element processing, without the reception element processing. The recipient and sender are checked from the identifier data of the received event. The recipient is the customer who has purchased the rating-system service and the sender is the company that produced the event data. This identification function operates similarly to the event identification of the reception procedure. The control data of the event batch is used to decide what it is wished for the rating procedure to do with the event. The event batch is processed according to the processing rules depicted in the parameters of the recipient company. If the event data are not identified in identification, or if this is not permitted in the parameters of the recipient company, such erroneous event data are stored in the erroneous events file.

Product allocation 203 and volume and bonus procedures 204 of the events are typically executed.

In the rate component processing 205, rate component and rate-component unit prices, account, and tax data are sought for product-specific events. Rate definition takes into consideration list rates, customer-specific rates, and product-specific campaign rates. The search for the product's rate components uses primarily contract-currency data added to the event. If rate components for the product cannot be found in the contract currency, the default currency defined for the company owning the rating process is used. If rating components cannot be found in this currency either, the case is an error, which leads to an error procedure. If the rating components are found in the default currency, a Warning-level notification is sent to the error procedure, because the cause may have been a failure to update the rating factors of the rater. The event data are analyzed into rate-list parameters while analysis of the rating gives the rate components of the product of the event. The allocated data are added to the event in standard positions, to accelerate further processing.

When the rate of the products/components are calculated 206 product-specifically, the component rates are calculated and added to the product-specific rate components of the event. Account and tax data are added to the rate components. The rate components, for which rates and taxes are calculated, are defined for each product copy of a party-role event. The rates and taxes of the rate component are summed at the product level, using the product copy. If errors occur in the calculation of the rates of the products/components, all the product and rate-component events of the event are stored in the rater's erroneous events file.

In customer-specific rating 207.1, the rate component à-rate is replaced with a customer or contract-specific à-rate. The rate identifier and customer identifier are used to retrieve the customer-specific rate. If the customer-specific rate is found, it is used to replace the rate component's à-rate. The rate identifier and the contract identifier are used to retrieve the contract-specific rate. If the contract-specific rate is found, it is used to replace the rate component's à-rate.

In calculating 207 the rate of the event, the event and the event's product-specific combined rates and account-specific taxes are calculated from the rates of the rate components, and excess rate components and event copies made technically for rating are deleted. The total rate for the event is calculated event-specifically. The rates and taxes of the rate components of the product copy are summed and supplemented at the product and event levels. If the event's products are rated in different currencies, the total rate is calculated currency-specifically. The calculation of the total rate can take product-specific currencies into account. The calculation of the total rate takes the effects of minimum and maximum rates into account event and product-specifically.

If the products of the event being rated affect volume or bonus accumulations, accumulation counters are maintained.

The discount procedures 208 are preferably executed.

When the rated event is sent to storage 209, the rated event and all of its product-specific rate components are sent to storage processing.

In the case of error procedures and interruptions 210, any of the stages 201 - 209 of the rating procedure can lead to an error procedure. Errors detected in the rating procedure are analyzed and classified and descriptions are entered in the error files, such as the logs of the rater, which may be utilized to re-initiate rating, once the cause of the error has been corrected. Erroneous events are recorded in an erroneous events file. Alternatively, an erroneous event can be transferred to storage, marked with error status.

Different error cases typically arise at different stages of the rating process:

| | |
|---|---|
| 201 | Data-transfer error, use-authorization error, or insufficient disk space |
| 202 | Unknown sender or recipient, unknown input-format |
| 203 | Allocation error, or contract-product checking error |
| 205 | Allocation error, rate-component currency-processing error and warning |
| 206 | Error in rate-component rate calculation |
| 207 | Errors in event rate calculation, in bonus accumulation maintenance |
| 208 | Errors in rate-component rate calculation, in discount calculation |
| 209 | Unknown recipient, insufficient disk space |

Events that analyses show to be erroneous are marked with error status and by default are transferred to the event recording and delivery element to be stored in the rated events database.

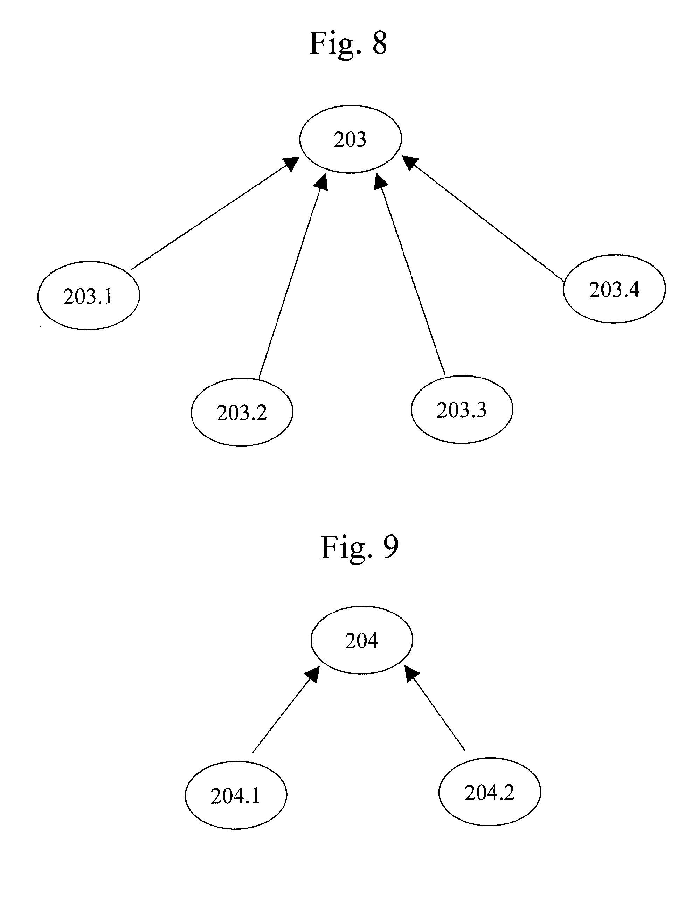

**The following describes one event allocation according to Figure 8.**

In event allocation 203, the party-role-specific products and product structures down to the ratable level are sought from the event. The product-structure data of the event are added to the event. If the rating is executed product-structure product-level-specifically, the event is copied as a product-specific event for rate definition and calculation. This is a technical division of the event. Functions 204 - 206 are executed separately for each product level of the event. Analysis involves comparing the event's data, such as the event's owner company, the sender company, and the product, with the allocation parameters. The return values from allocation are added to the event in standard positions, to accelerate further processing. The event's contract product data is checked. The product allocation of the event then uses the event's reception allocation processes, which are described in greater detail in the reception process description 101 - 110.

### 203.1 Reading of product-allocation parameters

The allocation data defining the party role of the event-type's recipient company are retrieved from the allocation parameters, for product allocation of the event.

### 203.2 Product allocation

The products used in the event are sought from the event on the basis of the allocation data defined for the party role of the event type's recipient company (Receiver/contract partner). If more than one product is found for the event on the basis of these definitions, a separate event is copied for each product. This product copy of the event, in an internal format used in the rating, is supplemented with product data relating to the party role's allocation parameter values according to the definitions, such as a product code or product group.

### 203.3 Contract-product check

The product data for the party-allocated event product copy is crosschecked with the contract data. If the product belongs to the contract, the product copy is accepted. If the product does not belong to the contract, the method proceeds to error procedure or the event is rejected on the basis of configuration.

### 203.4 Product package disassembling

Product-package allocation of the product copy of a party-allocated event and creation of product copies made on the basis of product-package disassembling. Product-package disassembling is executed for the product code of the party-allocated product copy of the event, if the event has product-package-allocated control data, such as a period-charge package, or if product-package allocation, such as call productization, which is based on package structures, has been defined for the event type.

Because the product code of the product copy of an event can be the code of a package product or of an individual product, and because it is possible to rate a package product: with the aid of the product package rate or the rate of the products relating to the product package, a hit is sought from the product-package structure, using the product-copy event code when disassembling the product package.

If the product code is found from the product-package structure, the product package that contains the product is first sought 'upwards' from the structure. If execution of the rating of the product is defined using the rate of the product belonging to the product package, only the product code of the product package is updated in the product copy of the event. If execution of the rating of the product is defined using the rate of the product package, only the product code of the product package is updated in the product copy of the event. If the product code is the same as the found product-package code, and execution of its rating is defined according to the products belonging to the product package, the product structure of the package product is now reviewed 'downwards' and a separate product copy of the party-allocated event is made for each product relating to it. The product code of the package-product is also added as info-data to these product copies of the event.

**The following describes one form of volume and bonus accumulation according to Figure 9.**

The event's customer and/or contract data are used to check 204 the volume and bonus-accumulation-data collection requirements set for the products of the event and the current accumulation counters are retrieved. The accumulation indicators and the corresponding accumulation counter values are added to the product-specific events.
204.1) Allocation of the contract's volume-rate counter, in which the product-level event's recipient, contract, customer, and product data are used to retrieve all possible hits from the parameters of the contract's volume counter. If there are no hits, the method proceeds directly to rate-component processing. If there is only one hit, the counter value obtained is transferred directly to the rating-volume field for rating and the method proceeds to rate-component processing. If there are several hits, the method proceeds to volume-counter selection.
204.2) Selection of the correct volume counter for the product event, in which the counter given at the most accurate level is selected according to the following sequence, if there are several hits in the allocation of the contract's volume counter.

| Level | |
|---|---|
| 1. | Customer group |
| 2. | Customer code |
| 3. | Contract |
| 4. | Object of the contract |
| | If levels 1-4 are the same for the found counters, the level of the product also correspondingly affects the counter: |
| 1. | Product group |
| 2. | Product |

If, after product-level sequencing, several rate-volume counters still remain, the one with the greatest counter value is selected.

### Volume-counter cumulation allocation

In the volume-counter cumulation allocation, the volume counters (volume-rate counters and volume-discount counters), by which values the rated events are to be cumulated, are sought. After the rate-calculation and discount procedures, the rated event is matched with the parameter data, from which several cumulating counters can be found. The control data state the field, by the value of which the counter is multiplied, and whether the cumulation is the addition or deduction of the counter's value. The cumulation basis can also be a number of products, a duration, or a sum of money, which are taken from different fields, depending on the cumulation level. The cumulation level can also be a price-code level, an event level of the event's product level, a calculation line level, or the final sum level of the calculation.

### Volume-counter cumulation updating

In the cumulation updating of the volume counters, the cumulation volume counters relating to the rated event, which are, for example, volume-rate counters and volume-discount counters, are updated. The cumulation volume counters are updated using the fields of the rated event controlled by the allocation parameters.

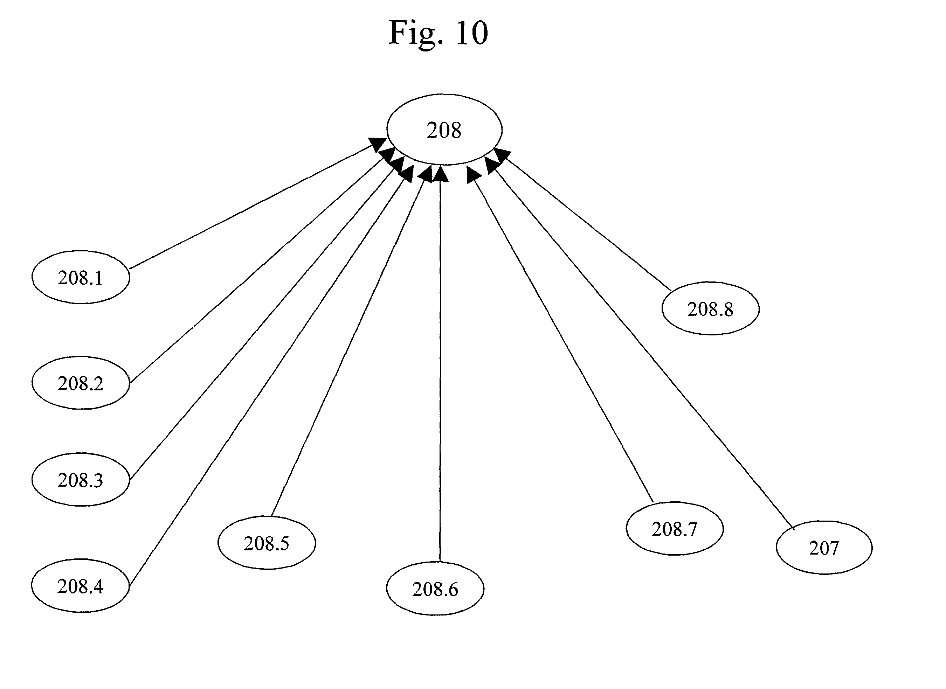

**The following describes one discount processing according to Figure 10.**

All discounts or possible discounts allocable to a single event are sought 208 for the event, using the event's customer, contract, product, and rate-code-specific discount data.

The discounts are added to the event's products as their own discount-rate components, or a separate event and discount rate components are copied from the discount.

The aforesaid single method stage 208 can include the following sub-stages 208.1 - 208.8.
208.1) Event-specific discount percentage procedure, in which only the discount according to this discount percentage is calculated from the value of the event, and no actual discount allocation is made, if the event being rated has an event-specific discount percentage for rating.
208.2) Discount-directory allocation, in which the key data is obtained, from the allocation of the discount directory, for all volume counters and basic discounts relating to the event. A single discount-directory line can only be allocated to a single volume-discount counter or discount. Discount allocation produces the discount terms and discount data relating to the event. One or several factors can be the search criteria of the discount allocation. The factors can be marked with a 'wild card' '*' character, so that the factor's value will not affect the allocation. Discounts are allocated to the rated event recipient and party-role-specifically by discount level, on the basis of customer, contract, object, product-group, and rate-code data. The operative system may set an application priority for the discount, according to the principles of its own discount control system. For instance, in one operative discount control system, it is wished to apply the upper-level discount of overlapping discounts in the hierarchy while in another operative discount control system the lower, i.e. the most important, level discount in the hierarchy, is applied. The use of priority can considerably reduce the data to be sent in an interface.

A priority added to the discount-directory interface is taken into account in the order of application of the discounts. The permitted values of a discount's application priority are 1 - 99. If several volume-discount counters or discounts are simultaneously found from the discount directory for an event, only the volume-discount counters and discounts with the smallest priority are taken into account. In the example case, the principle is that the most important level discounts wins.

AS1 has a 10% discount, affecting all of AS1's contracts. AS1 also has a 20% discount, affecting only AS1's contract PL4/1. To prevent contract PL4/1 being given both discounts, the priority 1, which is smaller than the discount priority (2) to be applied to all the customer's contracts, is defined for the contract PL4/1 according to the principle.

| | | |
|---|---|---|
| Priority | 2 | 1 |
| Contract type | * | PL |
| Contract | * | 4 |
| Object | * | 1 |
| Customer | AS1 | AS1 |
| Discount | 10% | 20% |

If it had been wished to apply the same principle without priority data, the data of the customer in question, broken down to the contract-object level, should have been brought to the discount-directory interface. If the principle is to apply all agreed discounts to an event simultaneously, all the data is given the discount-directory priority 1. In this case, the search fields are customer, contract, object, product group, product, rate code, volume step lower limit, and validity period. Event-level discount allocation is divided into three stages - stage 1 event level, stage 2 event-product level, and stage 3 event rate-code level.

### Stage 1, Event level:

Event-level discounts are allocated using the event's customer, contract, and object data.

### Stage 2 Event-product level:

Event-product level discounts (Product group Product) are allocated using the event's customer, contract, and object data and the product-code and product-group data of the event.

### Stage 3 Event rate-code level

Event rate-code-level discounts (Rate code) are allocated using the event's customer, contract, and object data and the event's products' rate components' rate code data. The event's rate-code-level discounts are calculated from the rate component corresponding to the rate code of each allocated event product. An example is an event with 2 products, one of which has rate 1 component and the other has 2 rate components.

An individual discount component is created for the event-level discount, in connection with the final product (Product 2) of the event. An individual discount component is created for the product-level discount, in connection with Product 1. The rate-code-level discount is allocated to rate component 3 of Product 2. Bill-line-level discount allocation is only made for bill-line-level events. The bill's final-sum-level discount allocation is only made for the bill's final-sum-level events.
208.3) Volume-discount counter allocation, in which the volume to be applied in the volume discount and the key data relating to the volume discount are obtained from the volume counter. A single volume-discount counter line can only be allocated to a single discount.
208.4) Discount allocation, in which the volume-discount steps and/or the basic discount's discount terms are obtained. Reference can be made to a single discount line from one or many discount-directory or volume-discount counter lines. For example, the volume counters for SMEs can refer to a single set of common "SME volume-discount steps".

### Return values:

Discount quantity, discount unit (EUR, %, or item, from which the euro amount is calculated), discount type (only best, or overlapping permitted), discount application order, gross/net, account.
208.5) Discount calculation, in which several discounts can be allocated to an event, from which the best is selected according to the rules, or overlapping discounts are calculated in a defined order. A single discount is calculated on the basis of the discount data, either as a fixed euro amount, or as a percentage per event, or as a rate component of the event. If only a single discount is allocated to the event, the discount is always calculated from the gross price and the calculated discount is taken into account.

At first the rate-component-specific discounts are calculated, each rate component of which being preferably calculated using the method described in the next section. After this, the product-specific discounts are calculated, preferably using the method described in the next section. Finally, the event-specific discounts are calculated for the last product of the event being rated. At rate-component level, the gross rate is the rate of the rate component, at product level the euro-specified sum of the product line, and at event level the sum of all the euro-specified rate components of the event.

If several discounts are allocated to an event, all the discounts are calculated in the following order: first, the discounts allocated to the gross rate (= 0) are calculated according to the Gross/Net field. Next, the discounts allocated to the net rate (> 0) are calculated in ascending order. All the calculated discounts reduce the net sum in descending order. The net sum remaining after the previous discount is used as the basis for calculating each net discount. The consideration code obtained from the discount acts as follows:

If, according to the consideration code, the discount is always considered, the discount will remain in force. If, according to the consideration code, the largest discount is considered, the discount is calculated, but waits for the other discounts with a similar consideration code to be calculated. Once all the "largest discount considered" discounts have been calculated, the largest of them is selected and remains in force.

Discount calculation using different discount units:

### Percentage discount:

The percentage amount indicated by the discount amount is calculated according to the Gross/Net field, from either the gross sum or the net sum.

### Fixed currency discount:

Calculated by deducting the discount amount from the total sum of the rate code/product/event.

### Free call time:

Item discount: calculated by multiplying the discount amount by the à-price of the rate code.

Minute discount: If the currency amount of the rate code is not greater that the volume counter value, the discount amount is the currency amount of the volume counter and the relevant discount amount should be deducted from the volume counter value. If the currency amount of the rate code is greater than the volume counter value, the discount amount is obtained by deducting the volume counter value from the currency amount of the rate code and the relevant discount amount should be deducted from the volume counter value.
208.6) Decision on the correct discount, in which the volume discounts and the basic discounts are handled in the same way after discount allocation and the same discount classifications and limitations apply to them.

The consideration code obtained from the discount acts as follows:

If, according to the consideration code, the discount is always taken into account, the discount remains in force,

If, according to the consideration code, the largest discount is considered, the discount is calculated, but waits for the calculation of other discounts with the same consideration code, and

Once all the "largest discount considered" discounts have been calculated, the largest of them is selected and remains in force.

### Discount classification:

· The discount given can be ordered to always be considered
· The discount given can be ordered to be considered only if it is the largest of the discounts of the allocation level
· The discount given can be calculated from the gross sum
· The discount given can be calculated from the net sum

### Typical limitations to discounts:

· The largest discount can only apply to discounts based on the gross sum.
· A discount based on the net sum can only apply to discounts always to be considered.
· A customer-specific volume discount always requires a volume-discount counter.
· A free-call-time discount always demands a volume-discount counter.
· Other discounts are not considered for an event together with a free-call-time discount.

208.7) Adding discount data to an event, in which a separate discount-rate component relating to the rate component, on which the calculation is based, is made for the calculated discount. When calculating the event and event's product-level sums, the discount rate components are included. Discount accounts and taxes are considered.

A discount can be allocated on five different levels:
1. Event rate-code level (Rate code)
2. Event product level (Product group Product)
3. Event level (Customer Contract Object)
4. Bill line level
5. Bill final sum level

At rate-code level, the discount's tax comes from the rate component that is the object of the discount. At product level, the discount's tax comes from the object of the discount. At event level, the discount's tax comes from the object of the discount. At bill-line and bill final sum levels, the tax code comes from the event. Bill-line and bill final sum level discounts are not rolled to the bill-line events.
207) When recalculating the rate of the event from the rates of the rate components, the combined rates of the event and the event's product-specific rates, as well as account-specific taxes are calculated, and the excess rate components and events are removed. The total rate of the event is calculated event-specifically. If the event's products are rated in different currencies, the total rate is calculated currency-specifically. The total rate calculation allows for three product-specific currencies. If the event includes more products in different currencies, a total rate for the event is not calculated. When calculating the total rate, the effects of discounts and minimum and maximum rates are allowed for event and product-specifically. If the products of the event being rated affect volume or bonus accumulations, the accumulation counters are updated.
208.8) Volume-discount counter updating (V4)

Discount calculation provides data, relating to free call time, of the deductible amount and of the volume-discount counter, the counter value of which needs updating.

### Minute discount of free call time:

If the rate-code currency amount does not exceed the value of the volume counter, the discount amount is the rate-code currency amount and the relevant discount amount should be deducted from the volume counter value. If the rate-code currency amount exceeds the volume counter value, the discount amount is obtained by deducting the volume counter amount from the rate-code currency amount and the relevant discount amount should be deducted from the volume counter value.

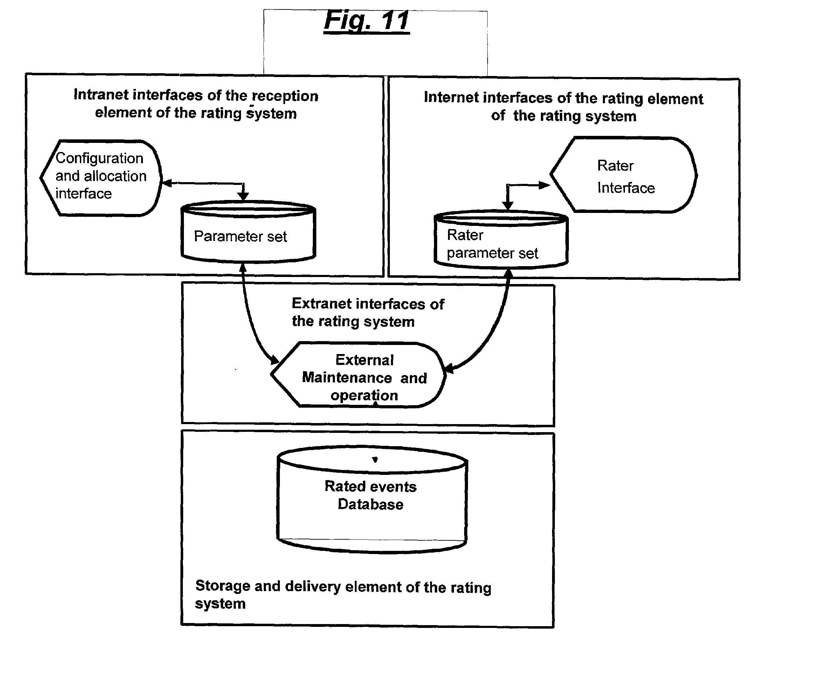

**The following describes one user interface environment, according to Figure 11, of the rating system.**

The rating system includes
1. Intranet user interfaces, which are user interfaces processing the data of all the companies using the rating service, and which are intended for the use of the main users and experts of the company providing the rating service.
2. Extranet user interfaces, which are multi-company user interfaces of the overall control of the rating system. These can be provided for the main users of the companies using the rating service and other users of the system.

The rating system's user interface functions are divided into
1. Operative control, which includes reception of events to be rated and maintenance of the control parameters, and maintenance of the sets of the rating procedure's rate-list parameters, relating to the reception and processing of the rater's event data.
2. Operative use, which includes the initiation forms of both the event's reception and rating procedures. Run-specific control parameters can be given from an initiation form.

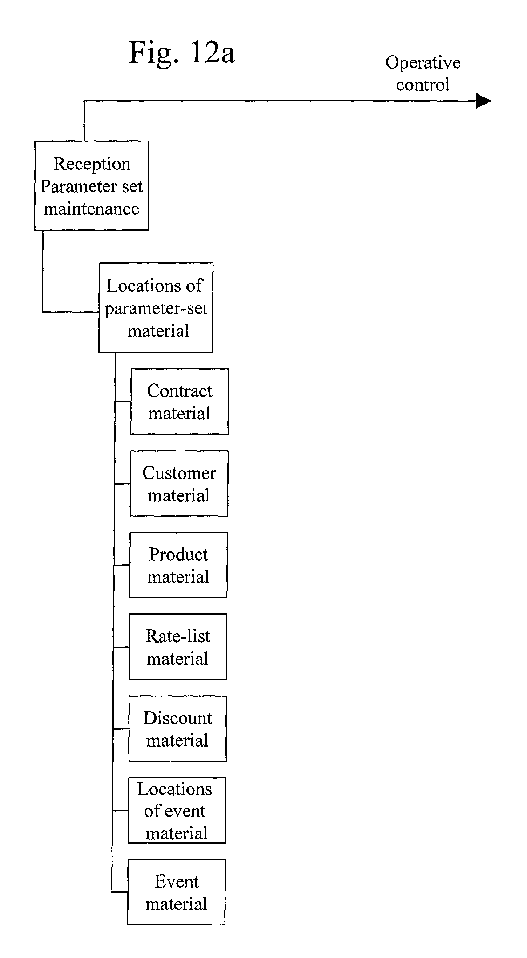

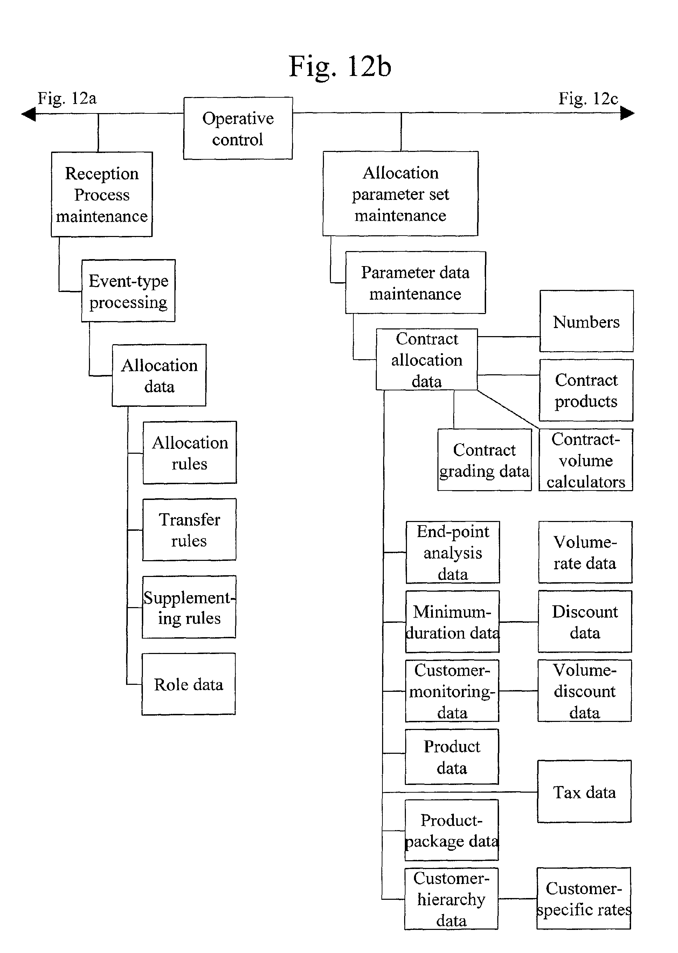

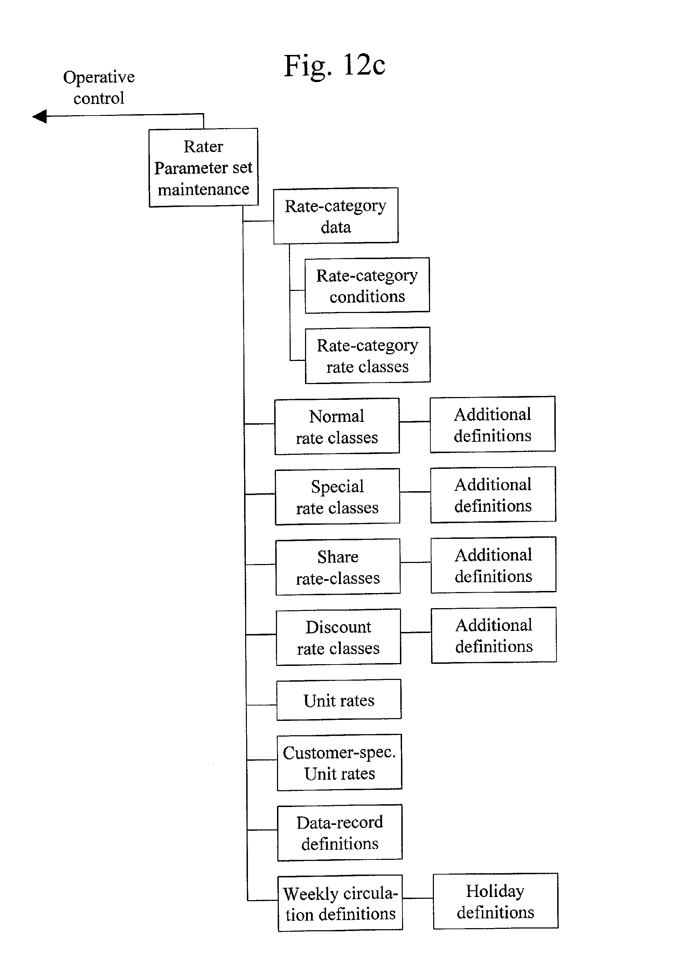

**The following describes one Intranet user interface environment according to Figure 12.**

The reception section user interface can be used to maintain the parameters relating to reception and allocations.

The reception section includes the following functions of the Operative use user interfaces:
- 501:: Event data management
- 502:: Checking log
- 505:: Reporting log
- 510:: Auditing log

By using the rater section user interface, the main user of the company providing the rating service can maintain the parameters of the rater.

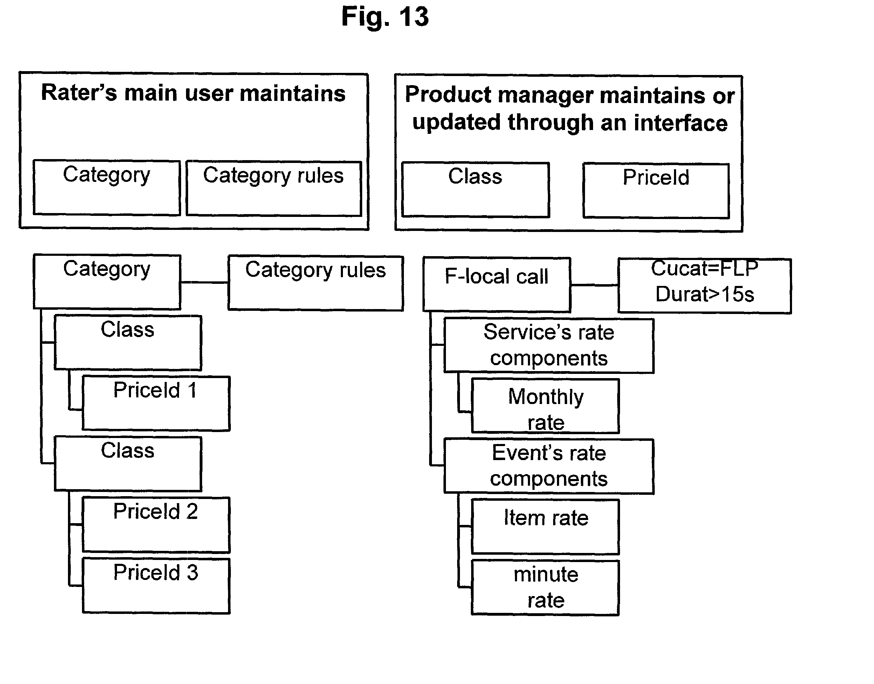

**Figure 13 shows one way in which the users, in different roles, of the rater section user interface can maintain the rater's parameters.**

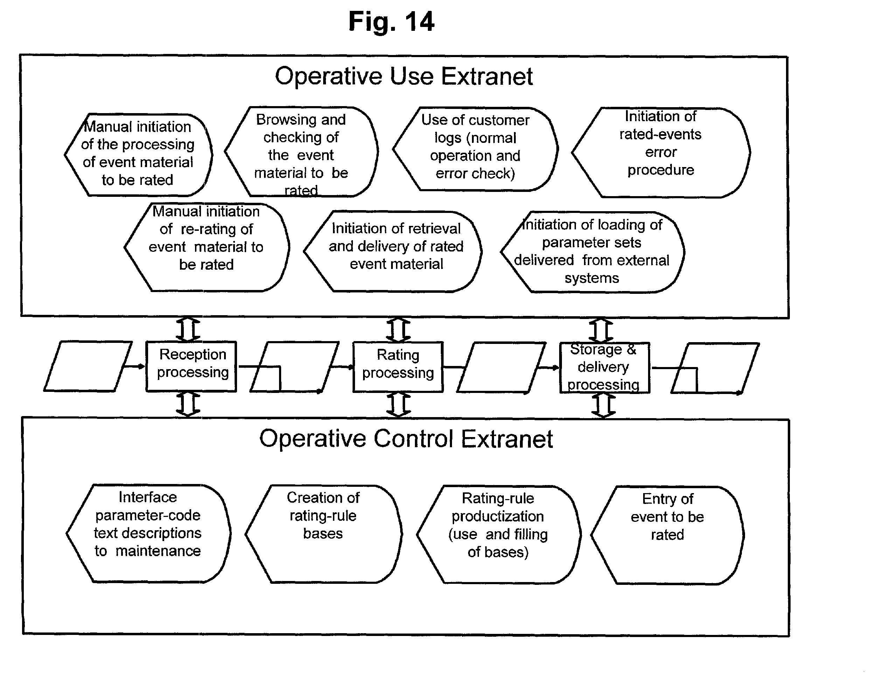

**Figure 14 shows one possible role division between operative use and operative control through the extranet user interfaces for controlling the method and means according to one embodiment of the invention.**

Using the extranet user interfaces, users are able to maintain, to a restricted extent, the parameter data of one contract partner, or to use the rating system for the manual initiation of the reception of event material to be rated, for initiating the parameter data of external operative systems, for the manual entry of an event to be rated, for the limited maintenance of the sets of rating parameters, for rated checking events, and for initiating correction and re-rating.

Unlike the system's intranet user interfaces, the extranet user interfaces provide multi-company properties and possibilities limited by user group for using permitted functions.

The user identification of an extranet user interface can be made in the operator's user-data control system, for example, in the LDAP directory. The user groups of the contract partner and the users are maintained in the user-data control system. A user identifier can belong to several user groups, while authorizations to the necessary forms and functions of the system are linked to a user group. Authorization to use the data of one or several contract partners can be connected directly to a user identifier or to a user group.

Extranet user interfaces are for both operative control and operative use.

### Operative control extranet user interfaces

The operative control user interfaces of the rating system are used to control and manage the functionality of rating and the usability of the system.

Extranet user interfaces can be used to do the following:
601.1) Maintaining the text descriptions of the code data of the user interface parameters
605.1) Create rating-rule templates
606.1) Use and complete products for rating and the list and customer rates of products from the rating-rule templates
607) Entering an event for rating

The functionality of the operative control extranet user interfaces is described in the main-use cases of this document.

### Extranet user interfaces of the Operative use

The rating system's operative use user interface is used to manage the operation of the rating system.

The extranet user interfaces can be used to initiate manually the reception of events to be rated, browse customer-specific logs, initiate the loading of sets of parameters using data obtained through external interfaces, and view rated events retrieved from the rated events database using search criteria.

An user interface can be used to initiate rated events service-request procedures (607 - 609), which are the initiation of the correction procedure for events stored in the rated events data store, the initiation of re-rating, the retrieval of rated events material, and the initiation of delivery.

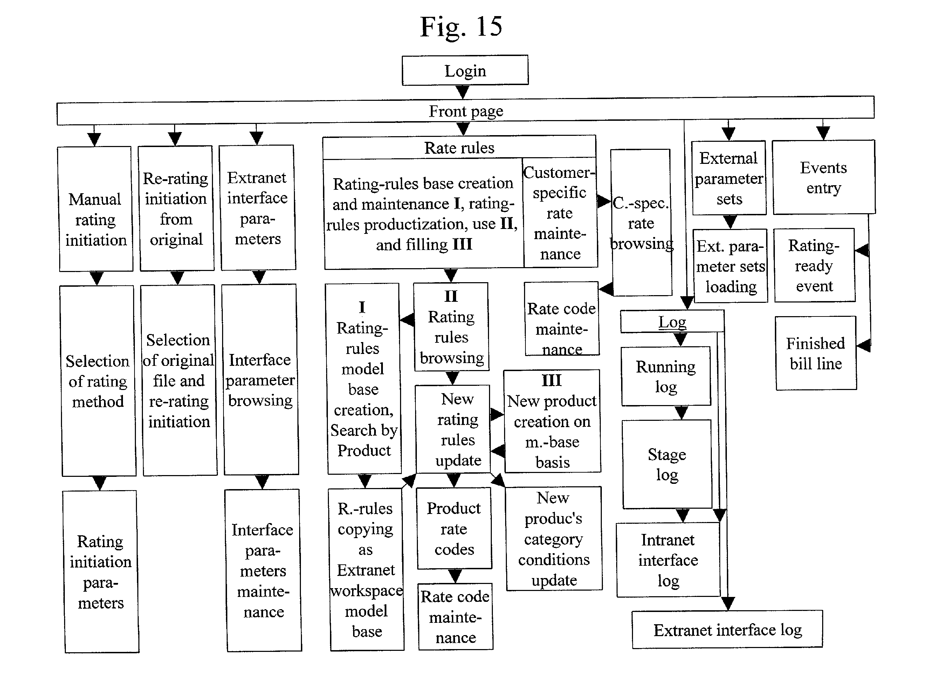

**Operations and operation structures according to the form chart shown in Figure 15 can be used according to the rating figure texts.**

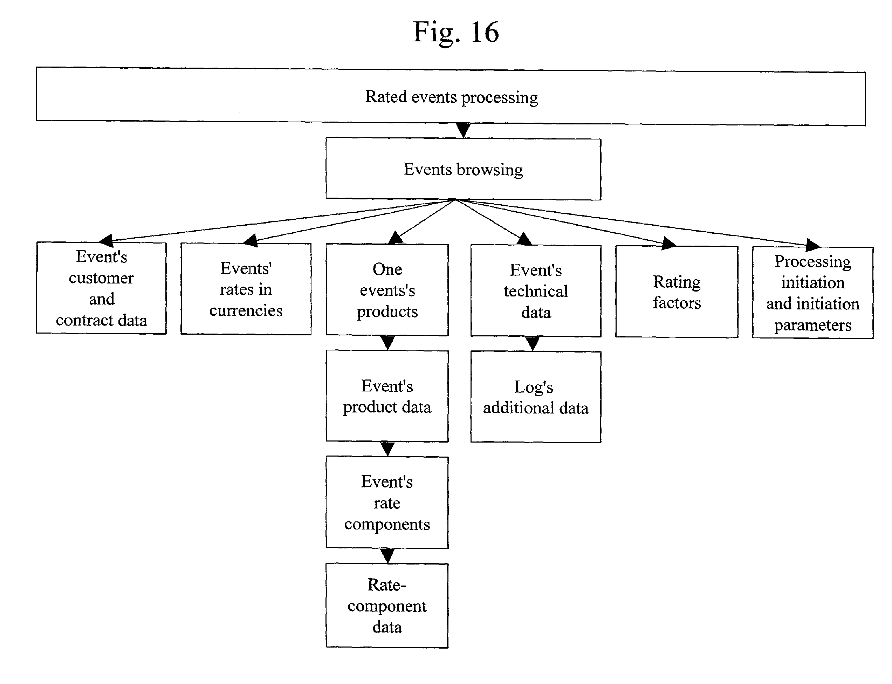

**Operations and operation structures according to the form chart shown in Figure 16 can be used according to the rated events processing figure texts.**

### Example of the set of forms of the extranet user interfaces

A table similar to that shown in the following can be set to act a navigation link for the functionalities of the extranet user interfaces described in this document and for the forms according to the interface chart.

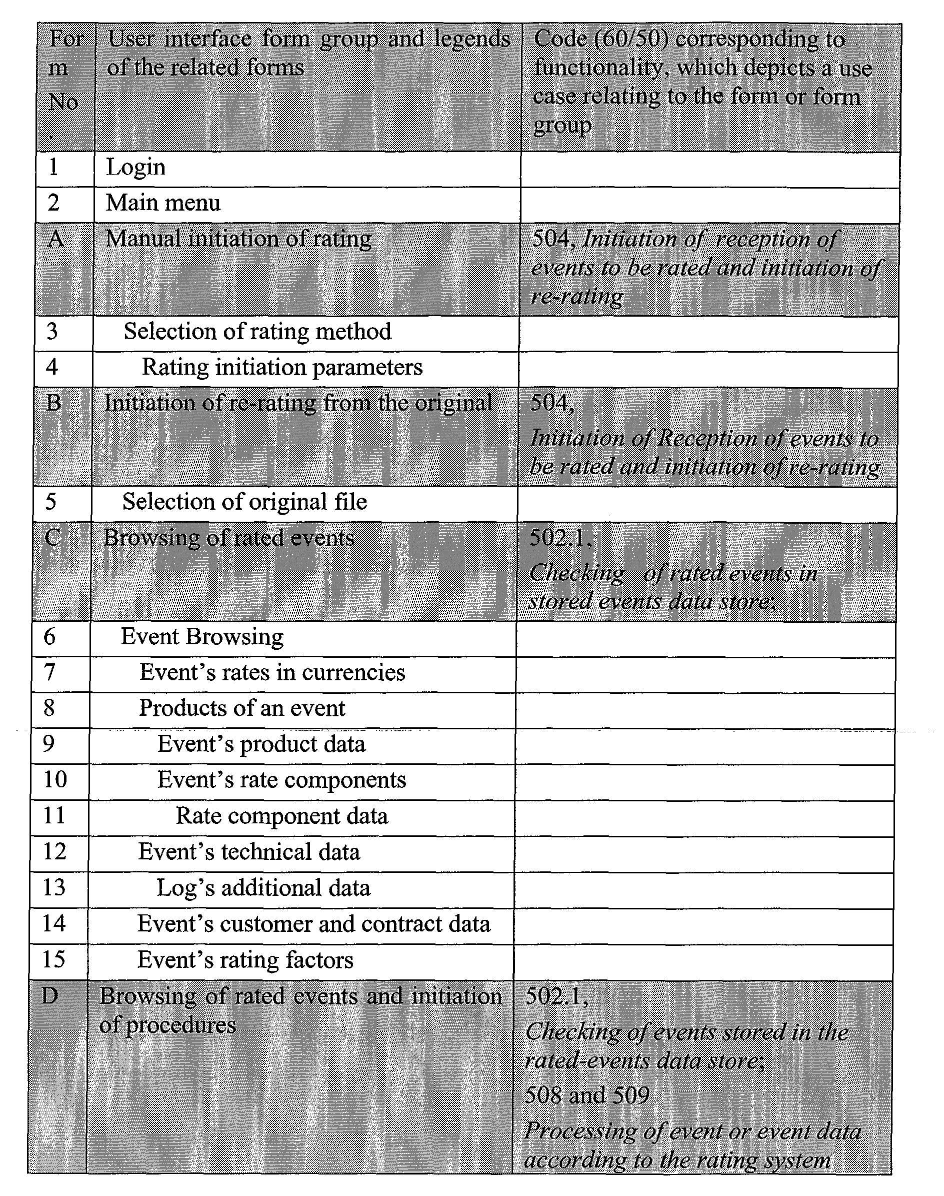

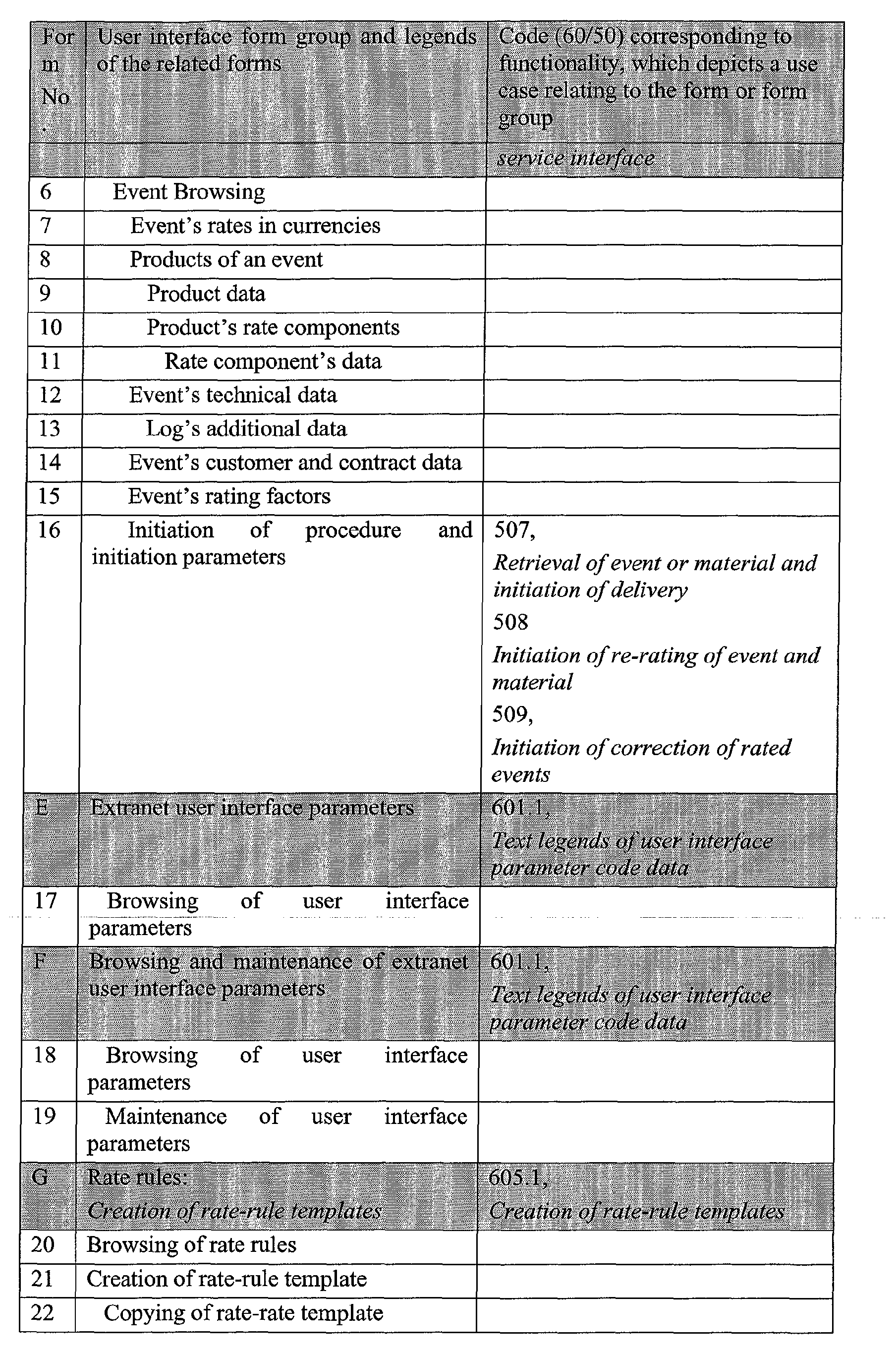

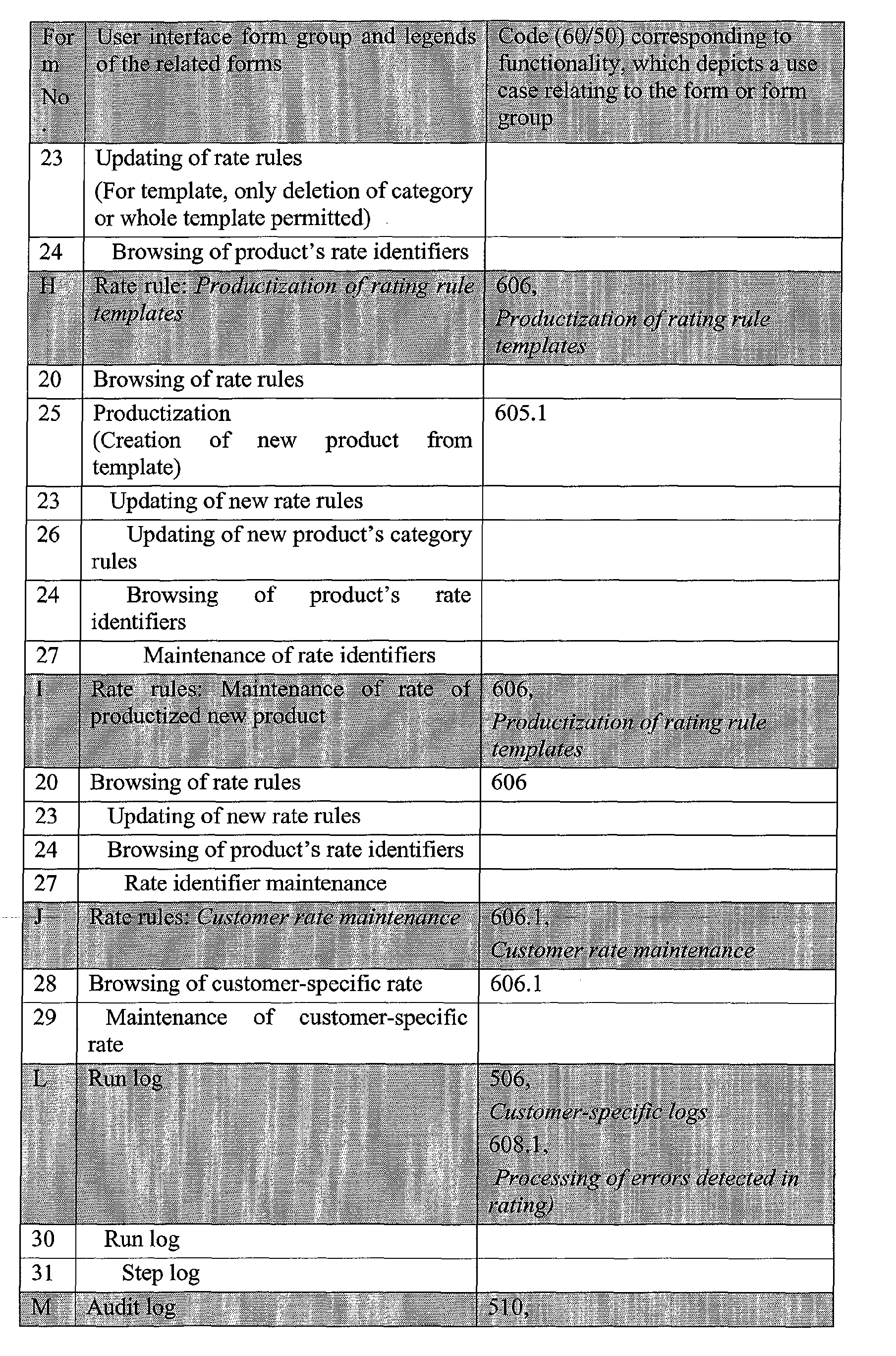

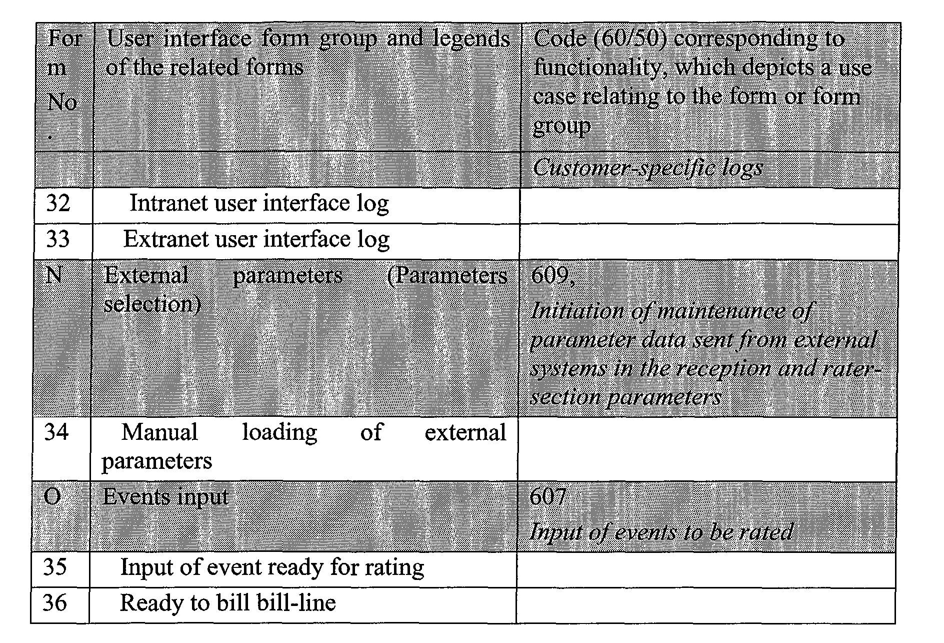

Profiles are combinations of various authorizations, which state what actions an extranet user interface user can perform. The following table depicts various authorizations, i.e. functions.

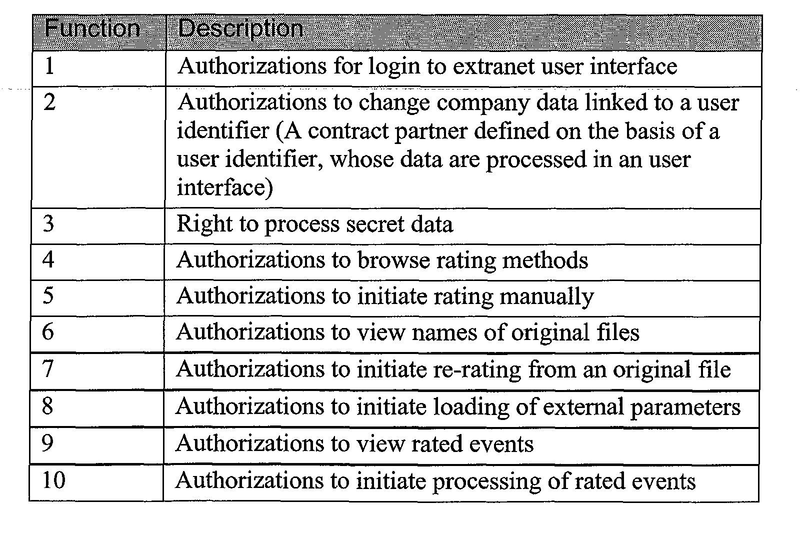

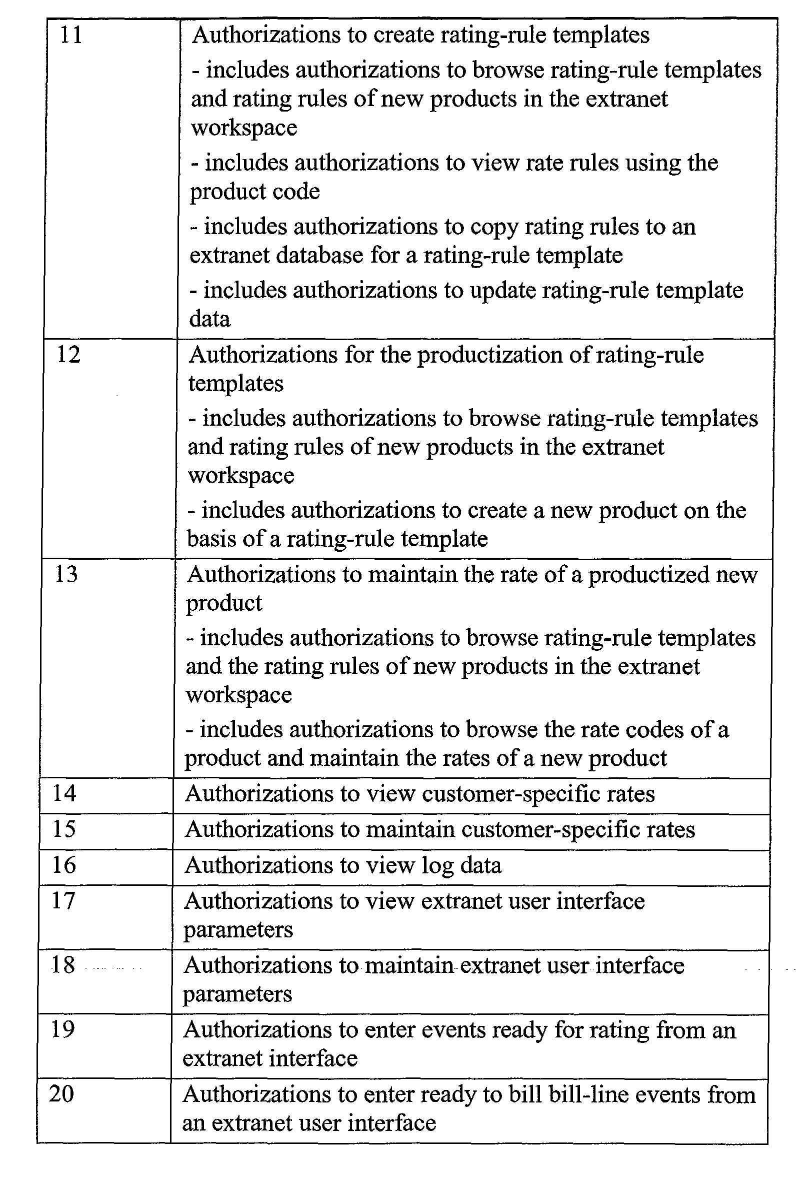

### Profiles

The profiles comprise various authorizations. The following table shows an example of user tasks and the authorizations relating to the profile.

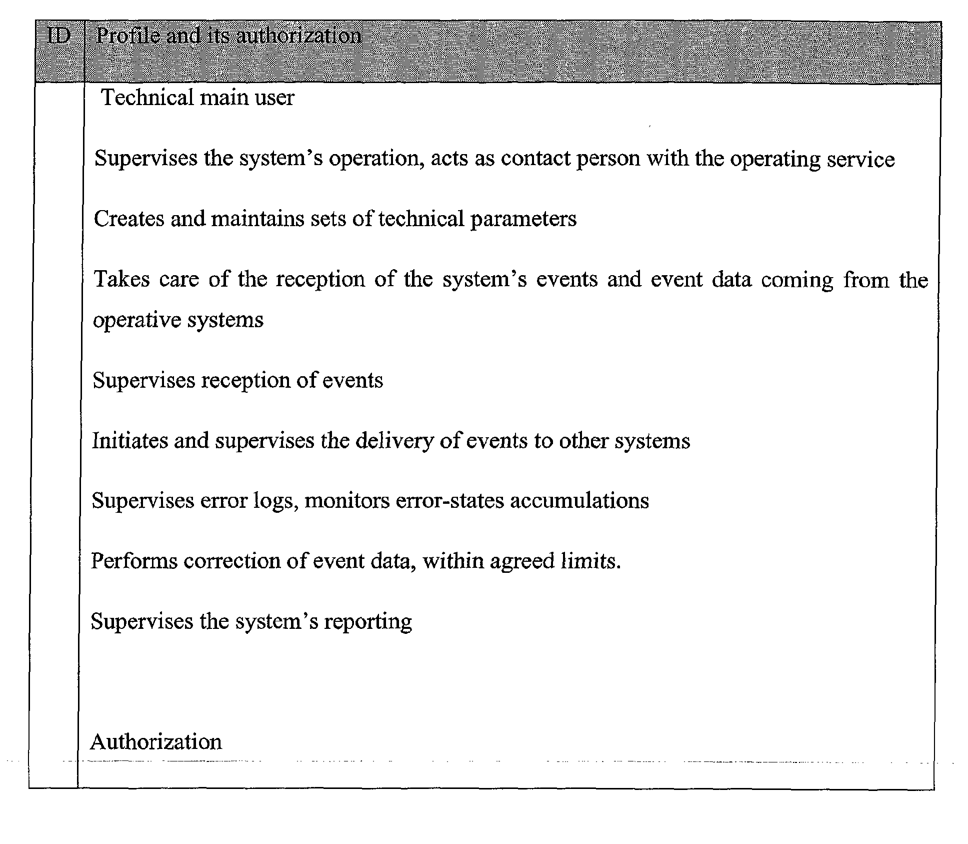

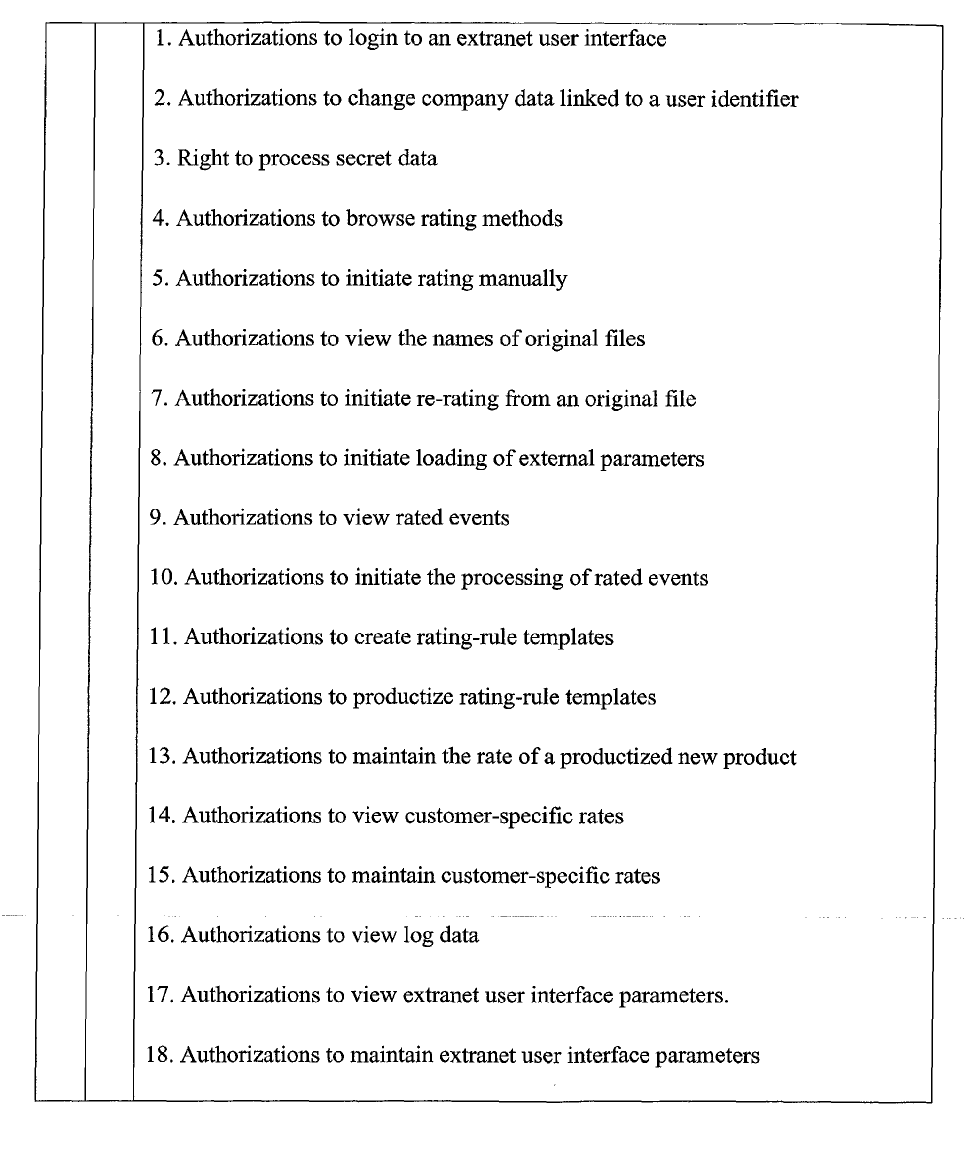

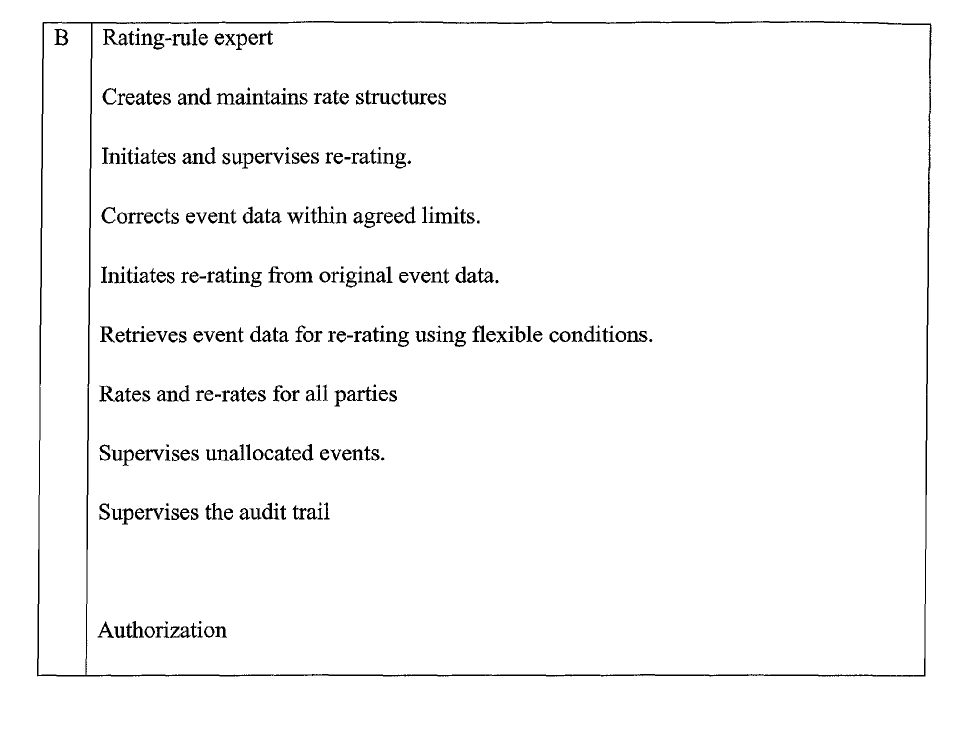

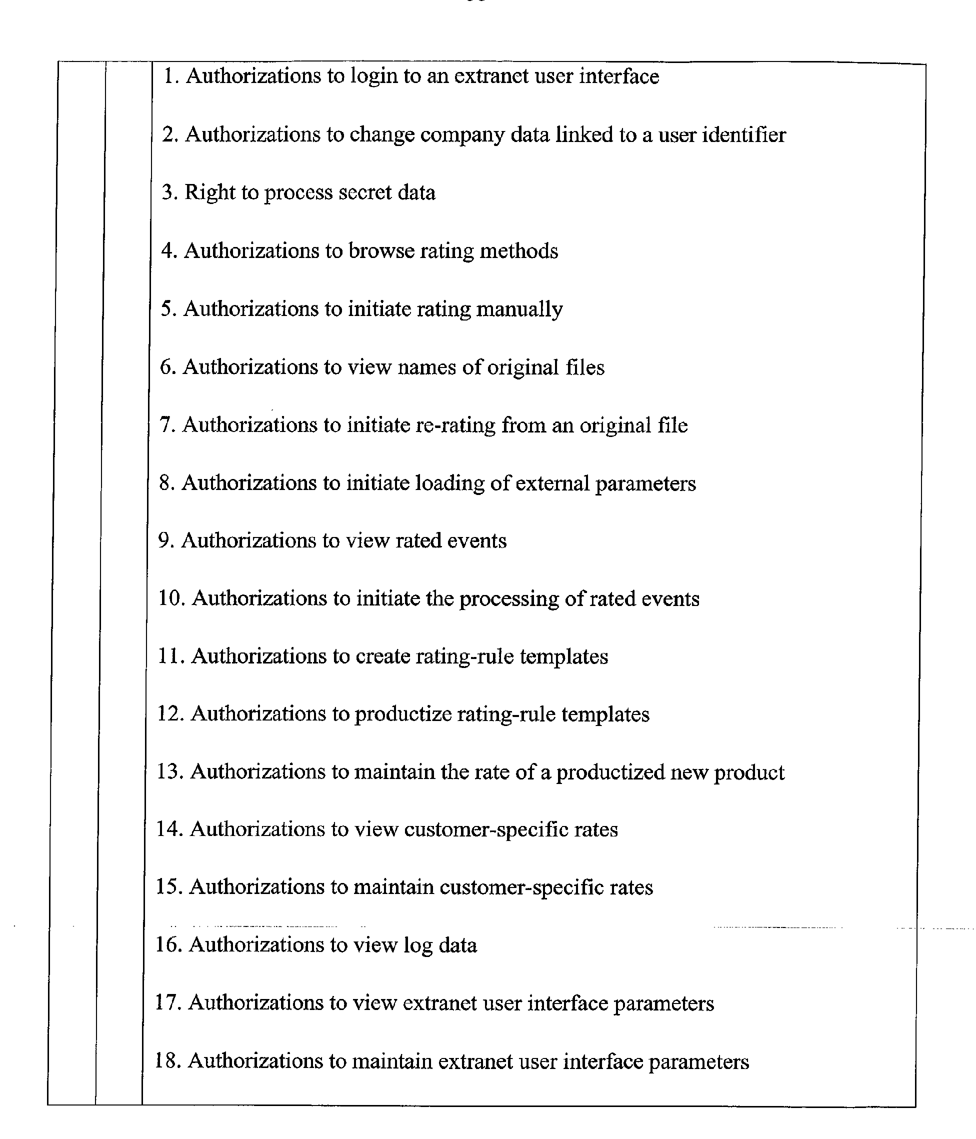

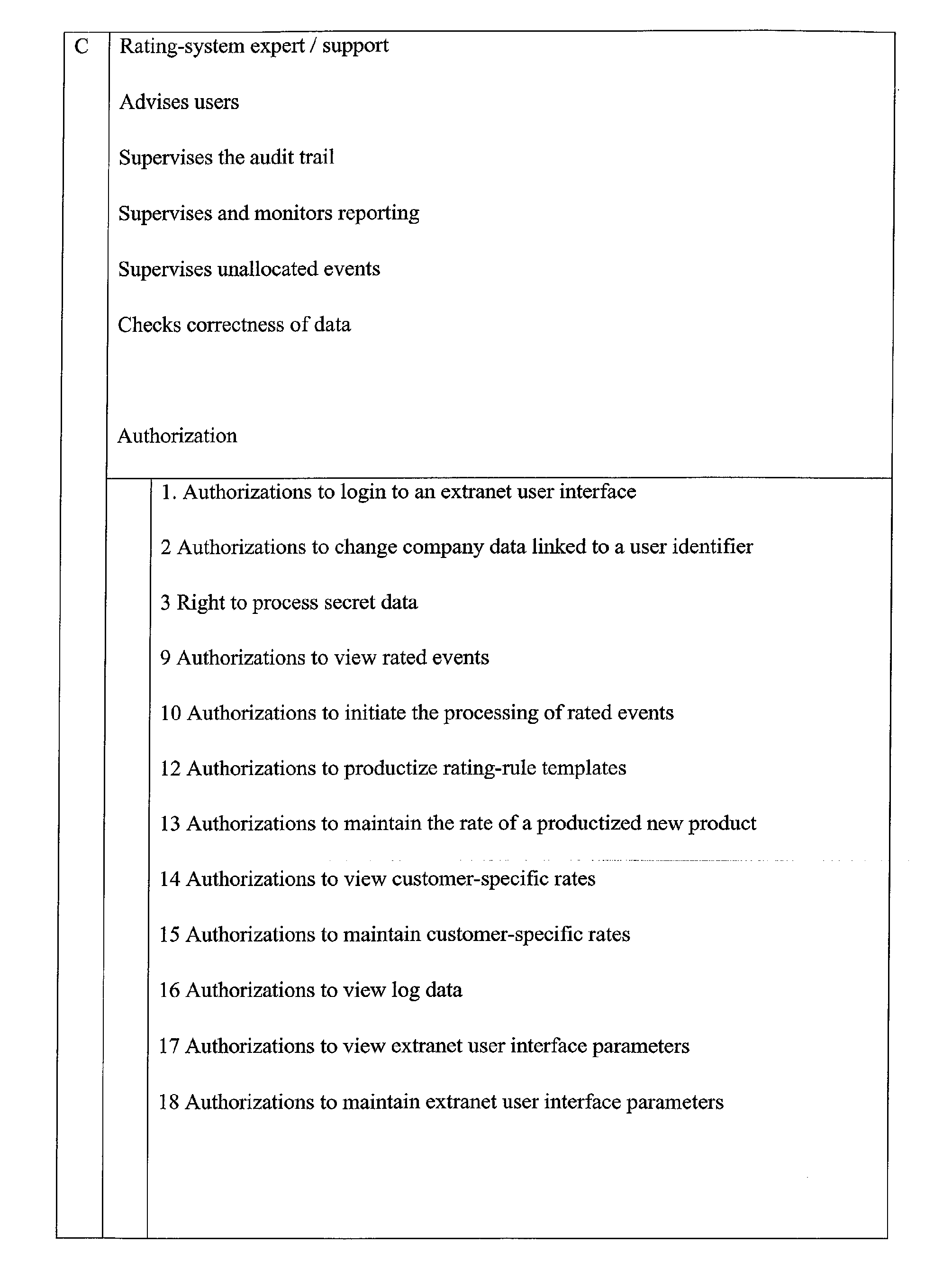

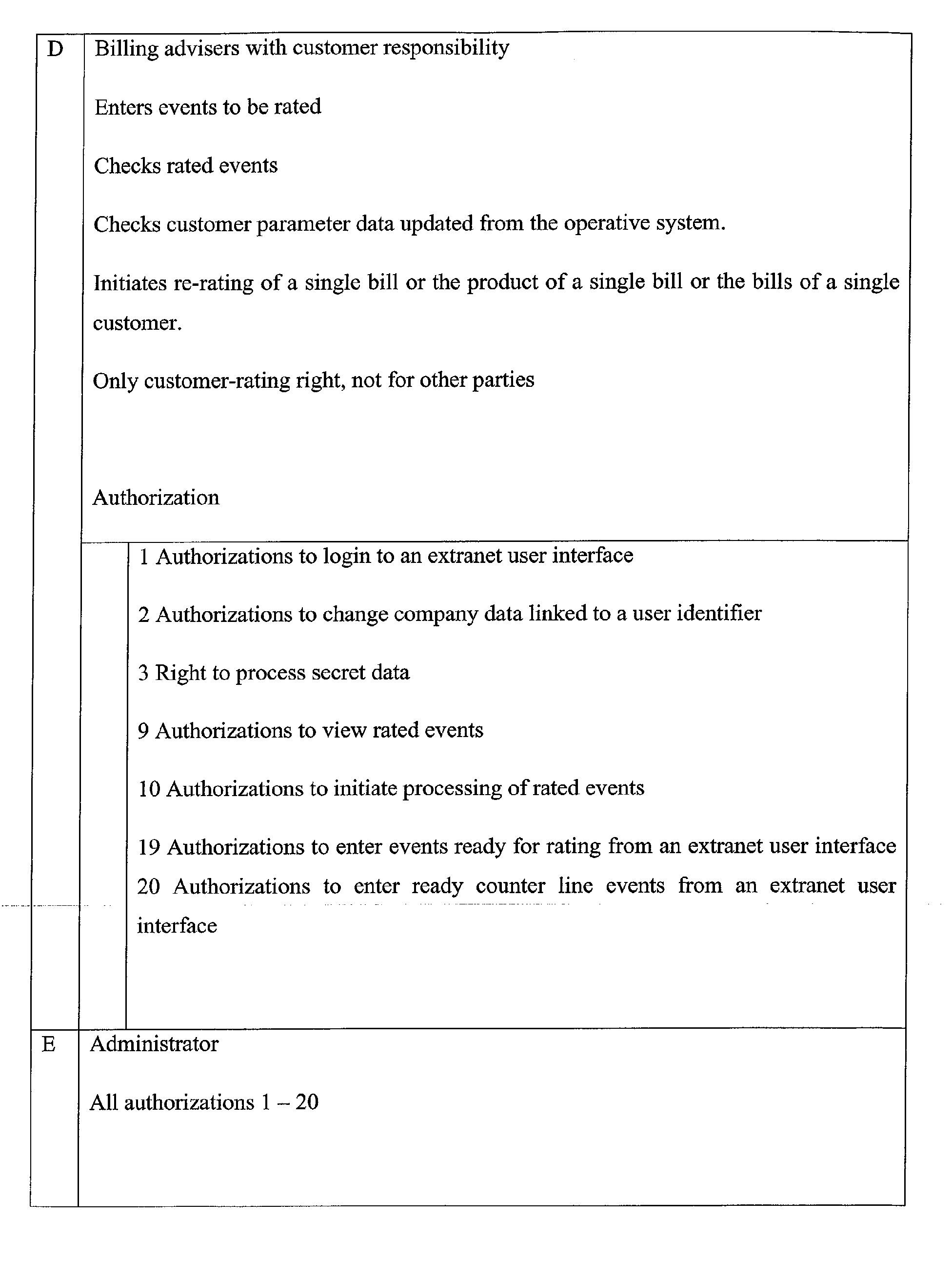

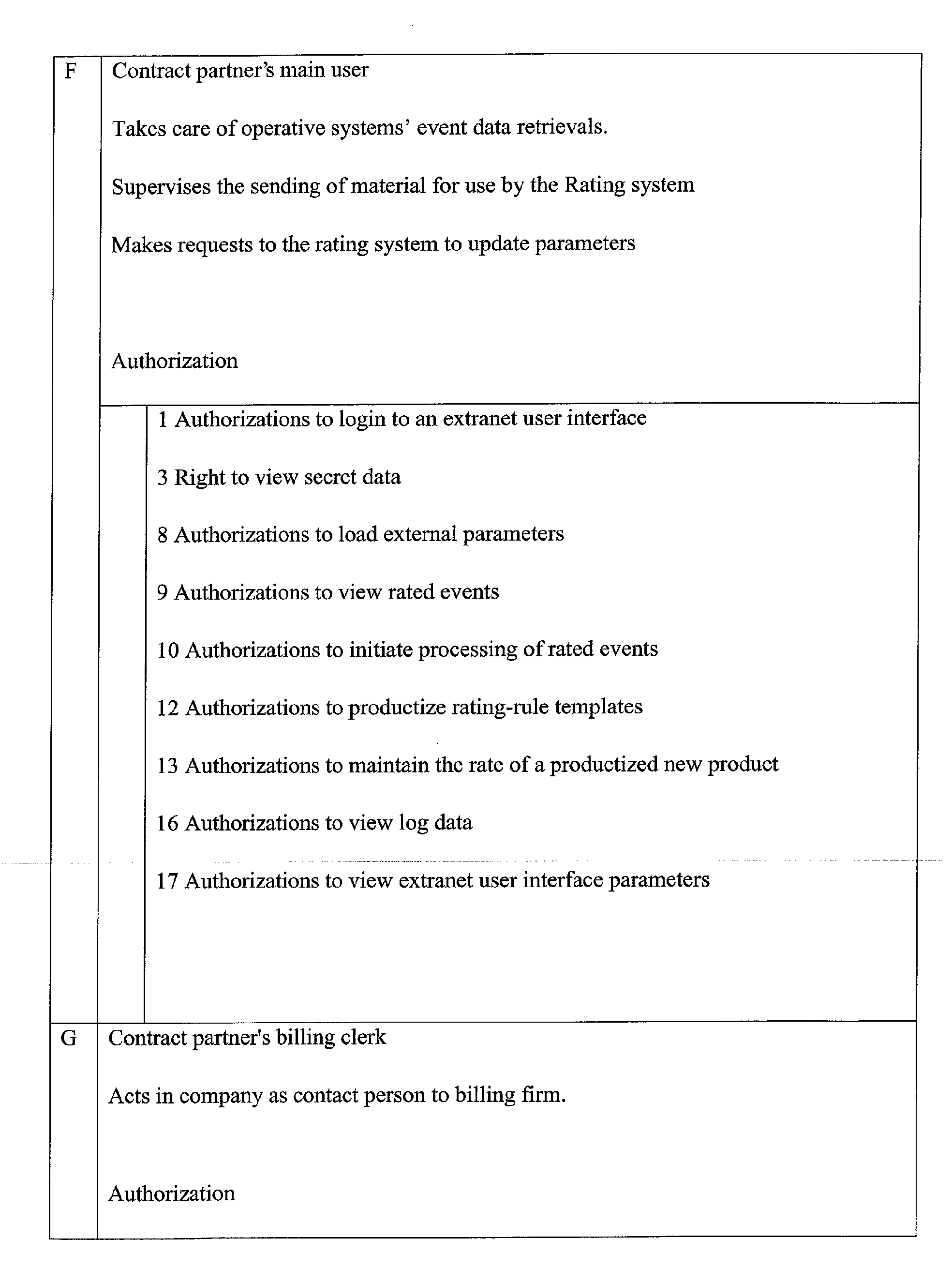

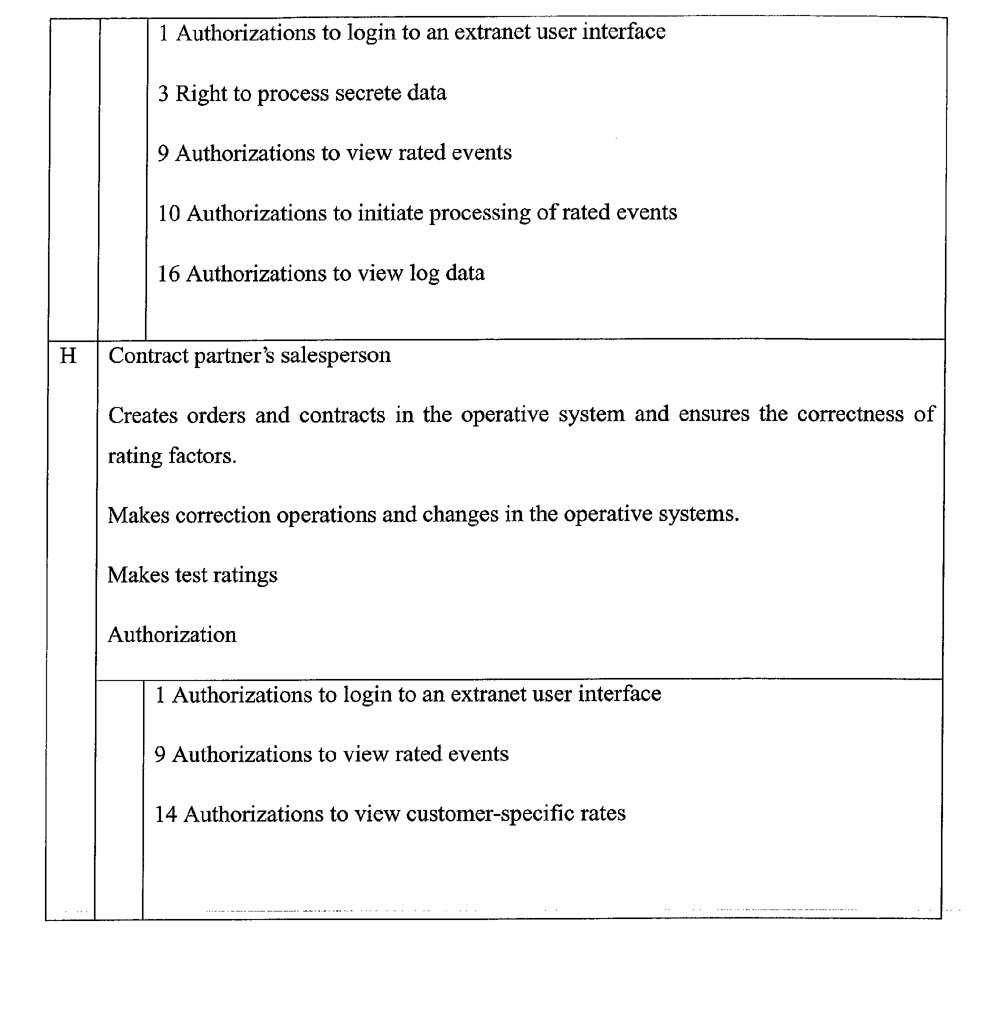

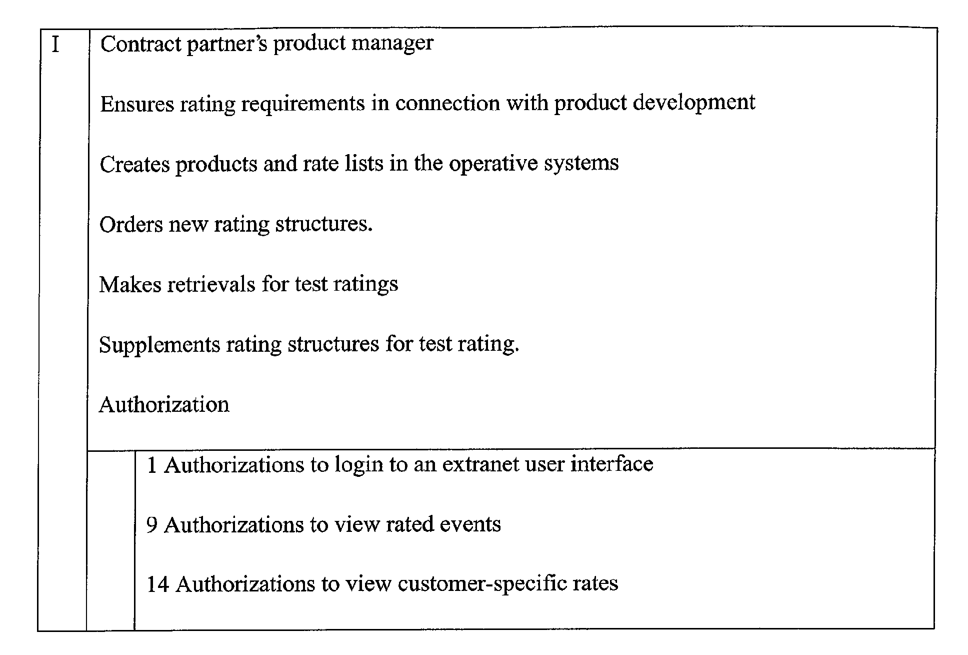

In addition, the method according to the invention can be applied in a manner differing from the above. A rating process applied to one rating service according to the invention can be set to comprise modular operations, which carry on mutual discussions through clear interfaces. Movement from one operation of the rating process to another can take place either in the rating process described, or other rating processes can be linked to the operations, if it is sensible in terms of business operations. Only some component of the process, e.g., the reception function, can be linked for use by the rating process.

The rating system is an important part of one billing process according to the invention. It is based on companies themselves sending billing events to the rating system for billing. The companies are responsible for material to be billed being sent once, and only once, i.e. the possibilities of the billing process to check the received material on reception are limited to rationality checks, which are set in co-operation with each company that purchases the billing, or only the rating service. It is possible, for example, to require call-usage data to come within certain limits daily and, if the limit values are exceeded in either direction, the data system's checks trip and it sends a detection message to the system's technical main user.

It is preferable to connect other functions described in the individual example to precisely those referred to above. Further, the method according to the invention can be flexibly applied for a process that supports and facilitates various rating and/or billing processes.

A drawback in the prior art is that there is often an undesirable delay between a trading event and the receipt of payment. In some cases, this delay prevents transactions from taking place; in others it causes increased uncertainty and/or costs. An undesirable delay in the information flow also hampers the management of the real process behind the cash process, as real processes are nowadays managed increasingly to optimize their related cash processes. Within a specific time, a slow circulation of cash leads to a low turnover or GDP. The objective of management is, however, often to increase the GDP, because a larger turnover or GDP facilitates the implementation of other management objectives. As more precise information is available, the same amount of resources need no longer be tied up in individual processes just to be on the safe side, which thus makes the processes more economical and/or profitable.

More specifically, there is often an undesirable delay in a multi-company environment between a trading event and the receipt of payment. Due to delays in the cash process, simplifications and checks, which reduce the quality of the service, may have to be made in the purchasing and rating of goods and services.

This application discloses a method, means, and computer software products for rating a product or service substantially in real time. Preferably applied...
... in these, at least one set of original event data is received, copies of the event data are created for at least as many parties to the party roles, contracts, and products as relate to the event. Each party copy is rated. The rated party copies can be stored. The rated party copies can be delivered to an external system without being stored. The rated party copies can be delivered to an external balance-monitoring system, which calculates a real-time balance for each party from the copies created.
... the rules are collected as a set of parameters in a centralized database and the rating process is controlled and defined with the aid of the set of parameters.
... a rated event includes at least one rate component, which may take the form of payment/time unit, or payment/event. Further, the contents of the rate component are based on a contract, product, product's list rate, contract rate, time of the event, a bonus defined in a contract, a tax rate, and/or a currency.
... when using an appropriate environment for it, the input format of the event is preferably a fixed-format CDR or ER record.
... in the method, the party roles can be, for example, customer rating, producer rating, cost rating, or income distribution. The party copies can be created for each party role according to control parameters, a contract, a customer number, a product, a product package, or similar, so that each party copy can be derived on the basis of the parameter values valid at the moment of rating.
... the rating process includes the stages 101 - 110, 201 - 210 , 301 - 305, and 401 - 408.
... a key is added to an event to be rated, thus making it an unique original event.
... each unique original event represents exactly one event type, for which a rating process is recipient-specifically defined in the parameters.

The method alternatives described are typically configurable flexible processes. In them, a company or similar entity can receive events to be rated from several different sources, deliver rated events to several different destinations, and also use the processing rules to select individual events to be rated in another company's rating process.

One means for setting rating can be set in use roughly as follows.

Company-specific control data, for example, party-specific allocation rules, are set. Company and role-specific allocation data, for example, contract, product, and discount-allocation data, are set preferably as parameter updates from the operative system, through general interfaces. By using one means for setting rating for different kinds of events it is possible to provide a flexibly configurable system, which includes the contract, customer, product, volume rate, volume discount, customer rate, and customer discount allocations required in rating. In addition, these ratings and allocations can be created for each type of event, from the viewpoint of different party roles, for example, end customer, interconnect, and sales commission.

By using one means a comprehensive and flexible rating system is obtained, which can be connected as a solution in any sector, which receives events to be rated, and which can be sent, through general interfaces, contract, product, rate, and similar allocation data, which be used according to the configured process to supplement the event to be rated, and to calculate the rate and discount components and taxes of the event. The rated event can be delivered ahead to configured further processing systems, such as billing, prepaid-billing, limit monitoring, bonus calculation, cost monitoring, product monitoring, or for storage in a database.

The party, entity, or 'company' examined in this application can also be a tax authority, or some other function of public administration.

One means for setting rating can include means
- for executing configurable allocations before and after rating,
- for executing the reception and retrieval processes of the configurable events to be rated,
- for executing the delivery processes of the configurable rated and/or original events,
- for linking allocations to the operative systems through interface files,
- for flexible party-role-specific processing, which is not limited to only roaming settlements,
- for discount calculation,
- for implementing a multi-company system, which is suitable for service-center operation, and/or
- for supporting an extranet user interface for customer companies, for viewing their own rated events, for entering, and for initiating processes.

These can include means...
- for setting the devices' rating and/or for adapting it to the customer' sector,
- for seamlessly combining the collection/reception of events,
- for executing the rating process,
- for combining seamlessly the delivery of the rated and original events in the rating process,
- for maintaining the contract, customer, product, volume, rate, customer rate, and/or discount data in a centralized manner,
- for rating an event as its own processes, from the point of view of each necessary operating requirement,
- for making, at one time, all the calculations, including discounts, relating to the rating of an event that is significant to the customer,
- for rating the events of several different companies using the same system, making it possible to rate the events of several different companies, while nevertheless using each company's own processing rules and/or
- in service-center operation, for entering events to be rated and checked for the customer company and for initiating its own processes, in a configurable, flexible process.

One means include means
- for receiving events to be rated from several different sources,
- for delivering rated events to several different destinations,
- for transmitting individual events to be rated to another company's rating process, on the basis of processing rules,
- for obtaining allocation data as parameter updates from operative systems, through interfaces,
- for setting and/or executing party-specific allocation rules,
- for setting and/or executing a discount allocation and/or discount calculation,
- for taking company data into account in a control-data parameter database, and/or
- for executing a data-secure method for accessing a company's own data and processes in a multi-company system.

## Claims

1. A method for setting rating, including
- receiving (101) or collecting (102) event data on events, and
- creating (302) rated internal event formats from the event data,
**characterized by**
- providing at least two entities with individual sets of rating parameters,
- providing the said at least two entities with individual configuration interfaces, through which the individual set of rating parameters for each entity is arranged to be modified,
- in response to the event data, executing the rating process of the internal event formats on the basis of the individual sets of rating parameters, and
- correlating an individual internal event format for at least two entities from the individual event data, on the basis of the individual sets of rating parameters.

2. A method according to Claim 1, **characterized in that**
- the event data's reception or collection process control rules and parameters are received from the directions of various entities through a configuration interface connected to each direction, and
- the event data's reception or collection processes are controlled centrally in response to the control rules and parameters.

3. A method according to any of Claims 1 - 2, **characterized in that**
- the control rules and parameters of the internal event formats delivery process or of the delivery process of corresponding event data are received from the directions of various entities through a configuration interface connected to each direction, and
- the internal event formats' or event data's delivery processes are controlled centrally in response to the control rules and parameters.

4. A method according to any of Claims 1 - 3, **characterized in that**, in the method, the linking of internal event format allocations to the operative systems is executed (302) through interface files.

5. A method according to any of Claims 1 - 4, **characterized in that** party-role-specific processing, which extend outside the roaming settlement, are executed.

6. A method according to any of Claims 1 - 5, **characterized in that** discount calculation is performed.

7. A method according to any of Claims 1 - 6, **characterized in that** a multi-company system, which is adapted for service-center operation, is run.

8. A method according to any of Claims 1 - 7, **characterized in that** an extranet user interface is set for customer companies for viewing and/or entering internal event formats for rating, and/or for initiating processes.

9. A method according to any of Claims 1 - 8, **characterized in that** the rules are collected to form sets of parameters in a centralized data system and the rating process is controlled and defined with the aid of the parameter set.

10. A method according to any of Claims 1 - 9, **characterized in that** each of the set of rating parameters set by the said individual entities controls the common multi-company environment.

11. A method according to any of Claims 1 - 10, **characterized in that** an individual possibly customer-specific set of rating parameters is updated from the operative and/or an external system.

12. A method according to any of Claims 1 - 11, **characterized in that** event data possibly in various formats is received and/or collected from various sources and an internal event format is formed from them.

13. A method according to any of Claims 1 - 12, **characterized in that** the received event data is allocated to the control rules and parameters of at least one individual set of rating parameters and at least one independent event for rating is created from the event data, on the basis of identified party roles, contracts, and/or products.

14. A method according to any Claim 1 - 13, **characterized in that** the correction process for a rated event uses a method according to any of Claims 1 - 13 as such according to individual control rules and parameters, so that after correction of the erroneous parameters of the company, i.e. entity, the rating process is re-run in response to the corrected parameters.

15. A method according to Claims 1 - 14, **characterized in that**
- in response to a configuration change in the set of rating parameters, the rating of the already completed multi-company environment totality is changed afterwards substantially in real time, and
- each event is re-assembled on the basis of the parameters and control rules, which form from the viewpoint of the individual entity examined at the time.

16. A method according to any of Claims 1 - 15, **characterized in that** at least one product rate according to the event data and possibly the related discounts are defined according to the control rules and parameters relating to at least one individual set of rating parameters.

17. A method according to any of Claims 1 - 16, **characterized in that** the internal event format is delivered to an external system and to a data store for storage , according to the control rules and parameters relating to at least one individual set of rating parameters.

18. Means for setting rating, which include
- means for receiving or collecting event data, and
- means for creating rated internal event formats from the event data,
**characterized in that** they include
- means for providing individual sets of rating parameters to at least two entities,
- means for providing individual configuration interfaces to at least two entities, through the interfaces of which an individual set of rating parameters is adapted to be modified for each entity,
- means for executing the internal event format's rating process in response to the event data, on the basis of an individual set of rating parameters, and
- means for assembling an individual internal event format for at least two entities from individual event data, on the basis of an individual set of rating parameters.

19. Means according to Claim 18, **characterized in that** they include
- means for receiving control rules and parameters of the event-data reception or collection process from the directions of various entities through a configuration interface relating to each direction, and
- means for centrally controlling the reception or collection processes for event data in response to the control rules and parameters.

20. Means according to Claims 18 - 19, **characterized in that** they include
- means for receiving the control rules and parameters of the event-description delivery process, or of a corresponding event-data delivery process from the directions of various entities through a configuration interface relating to each direction, and
- means for controlling the delivery process of internal event formats, or of event data centrally, in response to the control rules and parameters.

21. Means according to Claims 18 - 20, **characterized in that** they include means for executing a link of the event-description allocations to the operative system through interface files.

22. Means according to Claims 18 - 21, **characterized in that** they include means for performing party-role-specific processes, which processes extend outside a roaming settlement.

23. Means according to Claims 18 - 22, **characterized in that** they include means for performing discount calculation.

24. Means according to Claims 18 - 23, **characterized in that** they include means for running a multi-company system, which multi-company system is arranged for service-center operation.

25. Means according to Claims 18 - 24, **characterized in that** they include means for setting an extranet interface for customer companies for viewing and/or entering their own rated events and/or for initiating processes.

26. Means according to Claims 18 - 25, **characterized in that** they include means for assembling rules to form set of parameters in a centralized data system and means for controlling and defining the rating process with the aid of the set of parameters.

27. Means according to Claims 18 - 26, **characterized in that** the include means controlling a common multi-company environment for the sets of rating parameters set by each of the said individual entities.

28. Means according to Claims 18 - 27, **characterized in that** they includes means for updating an individual possibly customer-specific set of rating parameters from an operative and/or external system.

29. Means according to Claims 18 - 28, **characterized in that** they include means for receiving event data in possibly different formats from different sources and means for creating internal event formats from them.

30. Means according to Claims 18 - 29, **characterized in that** they include means for allocating received event data to the control rules and parameters belonging to at least one individual set of rating parameters and means for creating from the event data at least one independent event to be rated, on the basis of identified party-roles, contracts, and/or products.

31. Means according to Claims 18 - 30, **characterized in that** the includes means for using a rated-event correction process according to any of Claims 18 - 30 as such according to the individual control rules and parameters, in such a way that they include means for re-running the rating process after correcting erroneous parameters of a company, i.e. entity, in response to the corrected parameters.

32. Means according to Claims 18 - 31, **characterized in that** they include
- means for afterwards amending, essentially in real time, an already completed rating of the multi-company environment totality, in response to a configuration change in the set of rating parameters, and
- means for re-assembling each internal event format on the basis of the parameters and control rules, which form the event from the viewpoint of the individual entity being examined at the time.

33. Means according to Claims 18 - 32, **characterized in that** they include means for defining the rate of at least one product according to the event data and the discounts possibly related to it according to the control rules and parameters relating to at least one individual set of rating parameters.

34. Means according to Claims 18 - 33, **characterized in that** they include means for delivering an internal event format to an external system and for storing it in a data store, according to the control rules and parameters relating to at least one individual set of rating parameters.

35. A rating system, which has at least two customer companies, which are connected to the rating system over a data communications link and which customer companies each have at least one role in the rating system, for each of which customer-company-specific roles control rules and rating parameters have been defined, and which rating system includes:
- means for receiving event data from an event to be rated,
- means for identifying and selecting the roles relating to the received event data from the group of customer-company-specific roles of the rating system,
- means for rating an event to be rated, according to the rating parameters defined for the selected roles and on the basis of the received event data, and
- means for forming role-specific internal event formats for the selected roles, each according to its own role-specific set of control rules.

36. A rating method in a rating system, which has at least two customer companies, which are connected to the rating system over a data communications link and each of which customer companies has at least one role in the rating system, a set of control rules and rating parameters being defined for each of which customer-company-specific role, and which rating method includes the following steps:
- receiving event data from an event to be rated,
- selecting the roles relating to the received event data from the group of customer-company-specific roles of the rating system,
- rating the event according to the rating parameters defined for the selected roles and on the basis of the received event data, and
- forming role-specific internal event formats of the event for the selected roles, each according to its own role-specific set of control rules.

37. A computer software product for setting rating, **characterized in that** it includes means according to any of Claims 18 - 35.
